(19)

Europäisches
Patentamt
European
Patent Office
Office européen
des brevets

(11) **EP 4 749 891 A2**

(12) **EUROPEAN PATENT APPLICATION**

(43) Date of publication:
**27.05.2026 Bulletin 2026/22**

(21) Application number: **25217489.1**

(22) Date of filing: **20.11.2025**

(51) International Patent Classification (IPC):
**H02K 7/14** (2006.01)     **H02K 9/06** (2006.01)
**H02K 16/00** (2006.01)    **H02K 21/22** (2006.01)
**H02P 6/04** (2016.01)     **H02K 11/33** (2016.01)

(52) Cooperative Patent Classification (CPC):
**H02K 16/00; H02K 7/14; H02K 9/06; H02K 11/33;
H02K 21/22; H02P 6/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.11.2024 US 202418960867**

(71) Applicant: **Black & Decker, Inc.
New Britain, CT 06053 (US)**

(72) Inventors:
- **WAIKAR, Shailesh P.
21128 Perry Hall (US)**
- **ZOU, Vincent Wensheng
21093 Lutherville-Timonium (US)**
- **RAMEZANI, Mehdi
21030 Cockeysville (US)**

(74) Representative: **SBD IPAdmin
The Reach
Bridge Avenue
Maidenhead, Berkshire SL6 1QP (GB)**

(54) **MULTIPLE ELECTRIC MOTORS ON A SINGLE SHAFT**

(57)     An electric motor includes a motor housing and a shaft that extends in a longitudinal direction through a length of the motor housing. A first motor is disposed within the motor housing and mounted to the shaft, and a second motor is disposed within the motor housing and mounted to the shaft. The electric motor includes an adaptor disposed within the motor housing, and a portion of the first motor and a portion of the second motor are disposed within the adaptor. The adaptor supports and pilots the first motor and the second motor. At least one motor controller is disposed on the adaptor and within the motor housing, and is electrically connected to the first motor and to the second motor.

Fig. 1

**EP 4 749 891 A2**

**Description**

This description relates to multiple electric motors on a single shaft.

Manufacturers of power tools and power equipment, such as power equipment for outdoor maintenance applications may desire to manufacture and produce power tools and power equipment that use high power (e.g., greater than 3 kW). In general, the power output for such power tools and power equipment may be limited by an amount of power that a single battery pack can deliver. To overcome this deficiency, multiple battery packs may be connected in series or in parallel; however, such schemes may pose additional challenges by adding complexity to the power tool and power equipment such as additional circuits, new motor controllers, and larger diameter wires to handle higher current demands.

It is desirable to develop technical solutions to the technical problems presented when delivering high power to power tools and power equipment.

A first aspect of the present invention provides an electric motor according to Claim 1 of the appended claims.

Preferred, and other optional, features are defined and described in the dependent claims.

It is to be understood that any feature of any aspect or embodiment, including any preferred or other optional feature of any aspect or embodiment, may be a feature, including a preferred or other optional feature, of any other aspect or embodiment, herein.

In some aspects, the techniques described herein relate to an electric motor including: a motor housing; a shaft that extends in a longitudinal direction through a length of the motor housing; a first motor disposed within the motor housing and mounted to the shaft; a second motor disposed within the motor housing and mounted to the shaft; an adaptor disposed within the motor housing, wherein a portion of the first motor and a portion of the second motor are disposed within the adaptor and the adaptor supports and pilots the first motor and the second motor; and at least one motor controller disposed on the adaptor and within the motor housing, the at least one motor controller electrically connected to the first motor and to the second motor.

In some aspects, the techniques described herein relate to an electric motor, wherein the at least one motor controller is a first motor controller that is electrically connected to the first motor and the electric motor further includes: a second motor controller disposed on the adaptor and disposed within the motor housing, the second motor controller electrically connected to the second motor.

In some aspects, the techniques described herein relate to an electric motor, wherein: the first motor controller is configured to manage a first battery pack and is programmed in a speed control mode to rotate the first motor at an input speed; and the second motor controller is configured to manage a second battery pack and is programmed in a speed control mode to rotate the second motor at less than the input speed.

In some aspects, the techniques described herein relate to an electric motor, wherein: during a no load operation the first motor controller maintains a constant speed on the shaft using the first motor to contribute torque to the shaft and the second motor does not contribute torque to the shaft.

In some aspects, the techniques described herein relate to an electric motor, wherein: during a load operation the second motor begins to contribute torque to the shaft when a speed of the first motor drops below a threshold speed.

In some aspects, the techniques described herein relate to an electric motor, further including: a system controller that manages a first battery pack for the first motor and a second battery pack for the second motor, wherein the first motor controller is programmed in a speed control mode and the second motor controller is programmed in a speed control mode.

In some aspects, the techniques described herein relate to an electric motor, wherein the system controller controls the first motor to rotate at an input speed and controls the second motor to rotate at a speed less than the input speed.

In some aspects, the techniques described herein relate to an electric motor, further including: a system controller that manages a first battery pack for the first motor and a second battery pack for the second motor, wherein the first motor controller is programmed in a speed control mode and the second motor controller is programmed in a torque control mode.

In some aspects, the techniques described herein relate to an electric motor, wherein: the first motor is an outer rotor motor; and the second motor is an outer rotor motor.

In some aspects, the techniques described herein relate to an electric motor, wherein: the first motor faces the second motor; the first motor rotates in a first direction; and the second motor rotates in a second direction that is opposite the first direction such that first motor and the second motor drive the shaft in a same direction.

In some aspects, the techniques described herein relate to an electric motor, further including: a first end cap that forms a rear wall, the first end cap having a first bearing pocket; and a second end cap that forms a front wall, the second end cap having a second bearing pocket, wherein: the first motor includes a first stator mounted to a first motor housing and a first rotor mounted to the shaft via a first bearing in the first bearing pocket, and the second motor includes a second stator mounted to a second motor housing and a second rotor mounted to the shaft via a second bearing in the second bearing pocket.

In some aspects, the techniques described herein relate to an electric motor, wherein: the first motor housing, the second motor housing, and the adaptor

include a series of fins that extend radially outward and longitudinally along a direction of the shaft.

In some aspects, the techniques described herein relate to an electric motor, further including: a fan coupled to the shaft within the motor housing, the fan external to the first motor and the second motor.

In some aspects, the techniques described herein relate to an electric motor, further including: a baffle disposed within the motor housing and around the shaft external to the first motor and the second motor, the baffle having a conical shape and being disposed adjacent the fan.

In some aspects, the techniques described herein relate to an electric motor, further including: a third motor disposed within the motor housing and mounted to the shaft.

In some aspects, the techniques described herein relate to an electric motor, further including: wiring that electrically connects the at least one motor controller to the first motor and to the second motor, the wiring running in a gap between the motor housing and an external surface of the adaptor.

In some aspects, the techniques described herein relate to an electric motor including: a motor housing; a shaft that extends in a longitudinal direction through a length of the motor housing; a first motor disposed within the motor housing and mounted to the shaft; a second motor disposed within the motor housing and mounted to the shaft; an adaptor disposed within the motor housing, wherein the adaptor supports and pilots the first motor and the second motor; a first motor controller disposed on the adaptor and within the motor housing, the first motor controller electrically connected to the first motor and preferably programmed in a speed control mode to rotate the first motor at an input speed; and a second motor controller disposed on the adaptor and within the motor housing, the second motor controller electrically connected to the second motor and preferably programmed in a speed control mode to rotate the second motor at less than the input speed.

In some aspects, the techniques described herein relate to an electric motor, wherein: during a no load operation the first motor controller maintains a constant speed on the shaft using the first motor to contribute torque to the shaft and the second motor does not contribute torque to the shaft.

In some aspects, the techniques described herein relate to an electric motor, wherein: during a load operation the second motor begins to contribute torque to the shaft when a speed of the first motor drops below a threshold speed.

In some aspects, the techniques described herein relate to an electric motor, further including: a system controller that manages a first battery pack for the first motor and a second battery pack for the second motor, wherein the system controller controls the first motor to rotate at the input speed and controls the second motor to rotate at a speed less than the input speed.

In some aspects, the techniques described herein relate to an electric motor including: a motor housing; a shaft that extends in a longitudinal direction through a length of the motor housing; a first motor disposed within the motor housing and mounted to the shaft; a second motor disposed within the motor housing and mounted to the shaft; an adaptor disposed within the motor housing, wherein a portion of the first motor and a portion of the second motor are disposed within the adaptor and the adaptor supports and pilots the first motor and the second motor; at least one motor controller disposed on the adaptor and within the motor housing, the at least one motor controller electrically connected to the first motor and to the second motor; a fan coupled to the shaft within the motor housing, the fan external to the first motor and the second motor; and preferably a baffle disposed within the motor housing and around the shaft external to the first motor and the second motor, the baffle preferably having a conical shape and preferably being disposed adjacent the fan, wherein the adaptor preferably includes a series of fins that extend radially outward and longitudinally along a direction of the shaft.

The details of one or more implementations are set forth in the accompanying drawings and the description below. Other features will be apparent from the description and drawings, and from the claims.

FIG. 1 depicts a rear perspective view of an electric motor and battery packs, including a shaft, according to an embodiment.

FIG. 2 depicts a front perspective view of the electric motor and battery packs of FIG. 1, including a motor cover, according to an embodiment.

FIG. 3 depicts a rear view of the electric motor and battery packs of FIG. 1, according to an embodiment.

FIG. 4 depicts a front view of the electric motor and battery packs of FIG. 1, according to an embodiment.

FIG. 5 depicts a left side view of the electric motor and battery packs of FIG. 1, according to an embodiment.

FIG. 6 depicts a right side view of the electric motor of FIG. 1, according to an embodiment.

FIG. 7 depicts a partial, cross-section view of the electric motor of FIG. 6 along an axial plane that does not intersect the shaft, according to an embodiment.

FIG. 8A depicts a cross-section view of the electric motor of FIG. 6, according to an embodiment.

FIG. 8B depicts a cross-section view of the electric motor of FIG. 5 without the motor housing, according to an embodiment.

FIG. 9 depicts a perspective exploded view of the electric motor of FIG. 1, according to an embodiment.

FIG. 10 depicts a perspective exploded view of the electric motor of FIG. 1, according to an embodiment.

FIG. 11A depicts a perspective, partially exploded view of the electric motor of FIG. 1 with one of the motor control modules in an exploded view, according to an embodiment.

FIG. 11B depicts a front, right top perspective view of the adaptor of the electric motor, according to an embodiment.

FIG. 11C depicts a rear, left top perspective view of the adaptor of the electric motor, according to an embodiment.

FIG. 11D depicts a cross-section view of the adaptor of FIG. 11B, according to an embodiment.

FIG. 11E depicts a perspective view of a motor control module, according to an embodiment.

FIG. 11F depicts a perspective view of a motor control module, according to an embodiment.

FIG. 11G depicts a perspective view of a motor control module, according to an embodiment.

FIG. 11H depicts an exploded view of a motor control module, according to an embodiment.

FIG. 12 depicts a top perspective, partially exploded view of the electric motor and battery packs of FIG. 1, according to an embodiment.

FIG. 13A depicts a top partially exploded view of the electric motor and battery packs of FIG. 1, according to an embodiment.

FIG. 13B depicts a top partially exploded, zoomed-in view of the electric motor and battery packs of FIG. 1, according to an embodiment.

FIG. 13C depicts a top view of the electric motor of FIG. 1 without the motor housing, according to an embodiment.

FIG. 13D depicts a cross-section view of the electric motor of FIG. 13C, according to an embodiment.

FIG. 14 depicts a front perspective view of an electric motor including a motor cover, according to an embodiment.

FIG. 15 depicts a rear perspective view of the electric motor of FIG. 14 including a shaft, according to an embodiment.

FIG. 16 depicts a cross-section view of the electric motor of FIG. 14, according to an embodiment.

FIG. 17 depicts a rear perspective view of an electric motor including a shaft, according to an embodiment.

FIG. 18 depicts a cross-section view of the electric motor of FIG. 17, according to an embodiment.

FIG. 19 depicts a perspective view of the electric motor of FIG. 14 illustrating an air flow pattern with the electric motor housing being semi-transparent, according to an embodiment.

FIG. 20 depicts a perspective view of the electric motor of FIG. 1 illustrating an air flow pattern with the electric motor housing being semi-transparent, according to an embodiment.

FIG. 21 depicts a perspective view of the electric motor of FIG. 17 illustrating an air flow pattern with the electric motor housing being semi-transparent, according to an embodiment.

FIG. 22 depicts a schematic diagram of an electric motor, according to an embodiment.

FIG. 23 depicts a circuit diagram of an electric motor including an inverter and two motors connected in a WYE-WYE configuration, according to an embodiment.

FIG. 24 depicts a circuit diagram of an electric motor including an inverter and two motors connected in a DELTA-DELTA configuration, according to an embodiment.

FIG. 25 depicts a circuit diagram of an electric motor including an inverter and two motors connected in a WYE-DELTA configuration, according to an embodiment.

FIG. 26 depicts a block diagram of a control system for an electric motor, according to an embodiment.

FIG. 27 depicts a block diagram of a control system for an electric motor, according to an embodiment.

This document describes technical solutions to the technical problems and challenges associated with delivering high power (e.g., greater than 3 kW) to power tools and power equipment such as, for example, a walk-behind cut-off saw, a walk-behind mower, a walk-behind power trowel, a walk-behind leaf blower, a snow blower, and other power tools and power equipment that may be used in both indoor and outdoor settings. In an example implementation, a technical solution may include an electric motor having multiple motors mounted to a single shaft, where the single shaft may also be referred to as a motor spindle, to drive the power tools and power equipment. The electric motor having multiple motors mounted to the single shaft may include different variations and combinations of the number of motors (e.g., two motors, three motors, etc.), the number of motor controllers (e.g., one motor controller, two motor controllers, three motor controllers, etc.), and the arrangement and mode of the motor controllers relative to one another and to an optional system controller.

The electric motor having the multiple motors mounted on the single shaft may achieve a technical effect of delivering higher power output while realizing improved thermal management of the multiple motors and motor controllers. More specifically, the electric motor having the multiple rotors mounted on the single shaft can deliver higher power output while eliminating the need for an expensive thermal management solution for stators and motor controllers. Further, the same or different types of motor controllers may be used for each of the multiple motors. The motor controllers may work with motor control schemes that include sensors (e.g., sensored motor control schemes) or motor control schemes that do not include sensors (e.g., sensorless motor control schemes). The same or different types of battery packs may be used to provide power to each of the multiple motors. Additionally, some implementations may eliminate the need for a complex battery packs management module. Conventional approaches of delivering such a high power requires either higher input voltage by electrically connecting two or more battery packs in series or parallel. The parallel battery pack configuration requires a complex battery pack management module to ensure that the battery pack with the highest state of charge does not charge one or more battery packs that are in parallel configuration and have a lower state of charge. The serial (or series) configuration of battery packs may require double insulation on the electric motor as well as to ensure safe operating conditions and to meet compliance requirements.

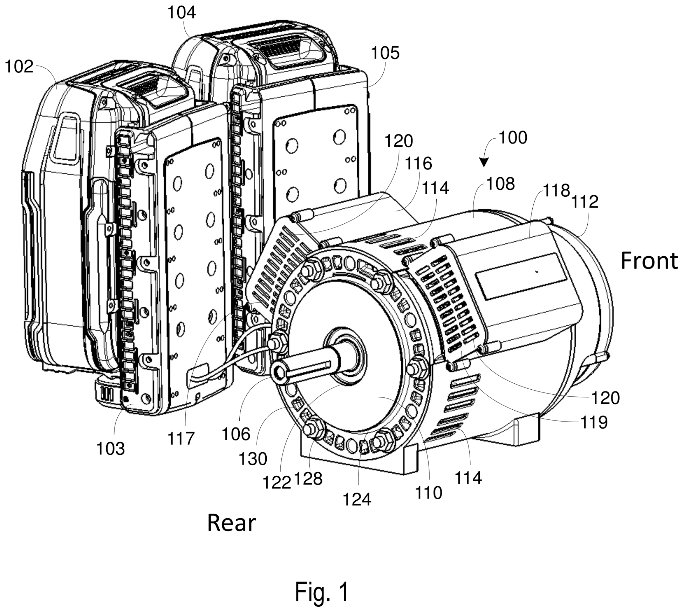

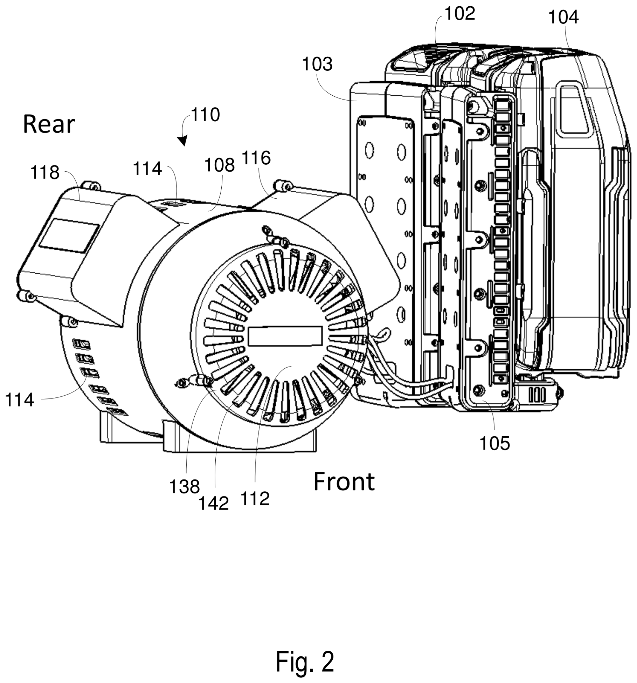

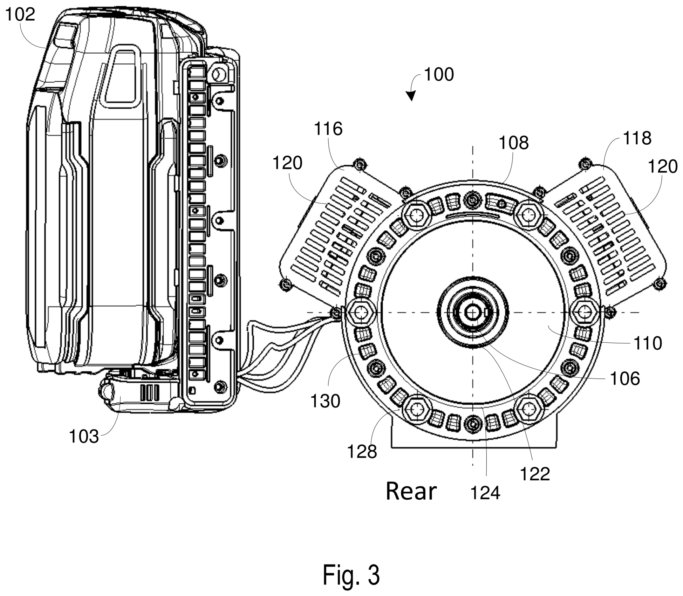

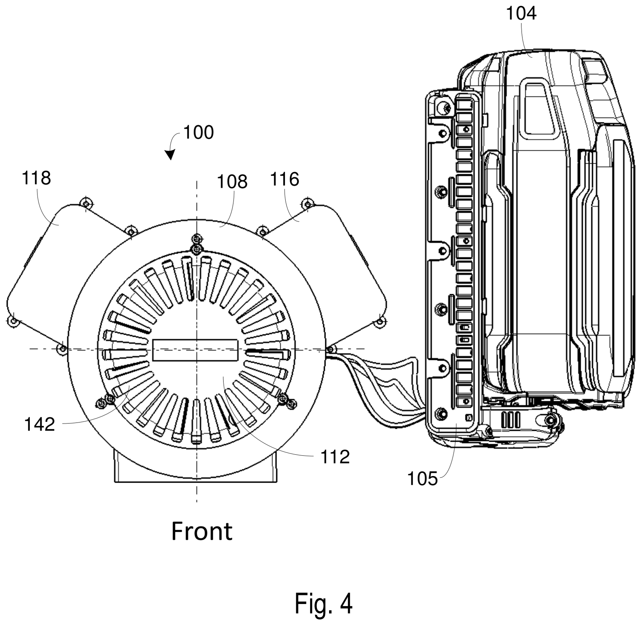

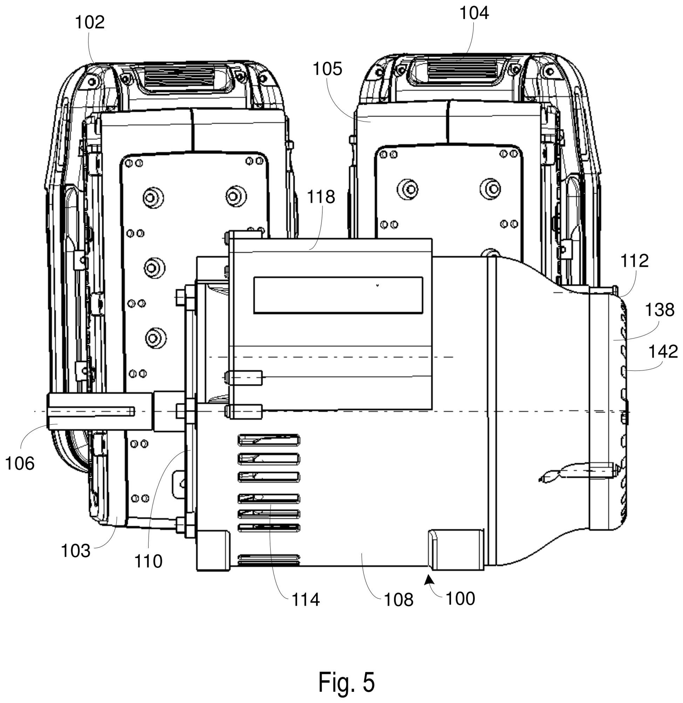

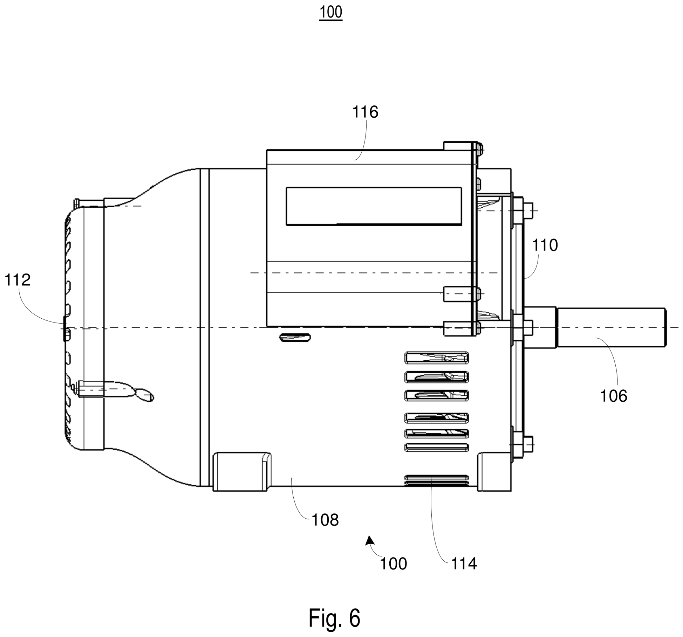

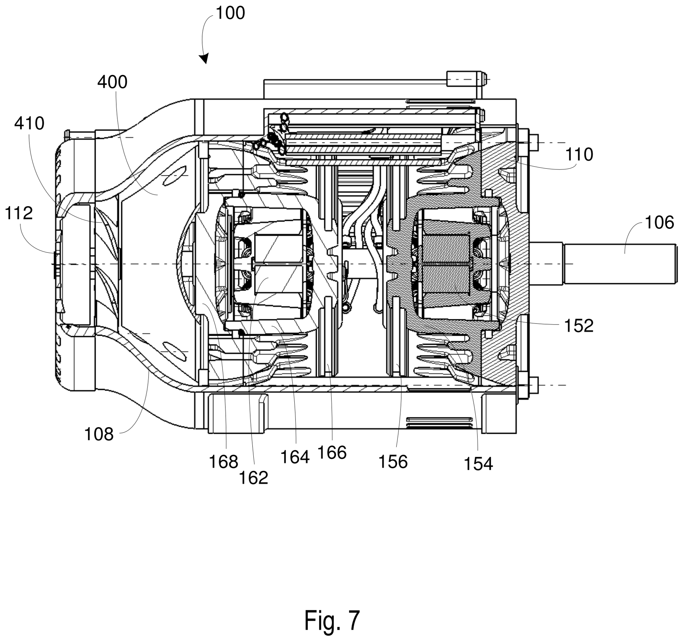

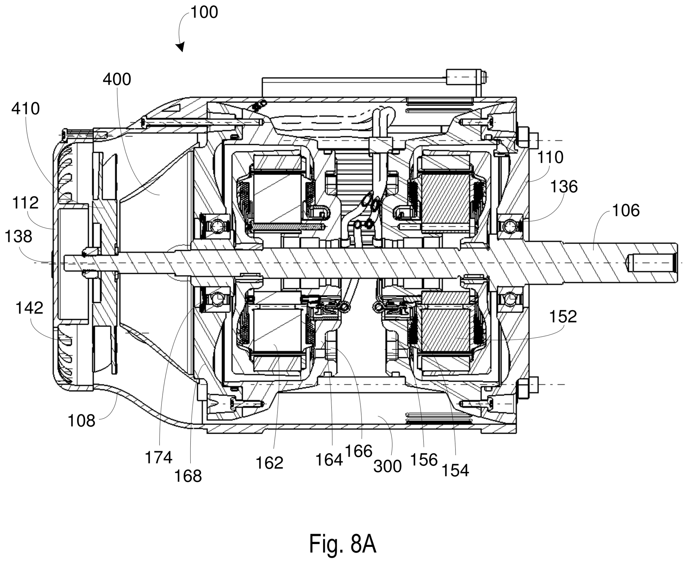

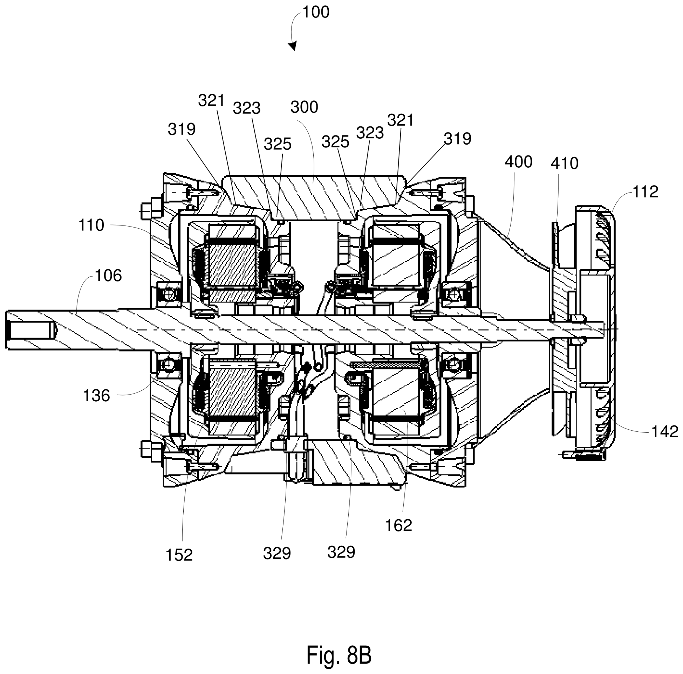

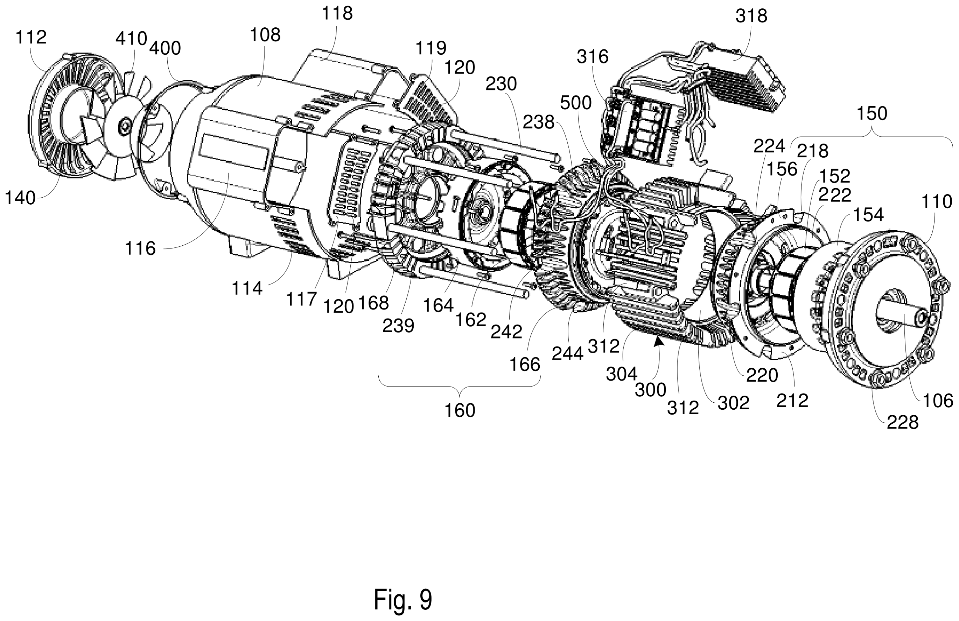

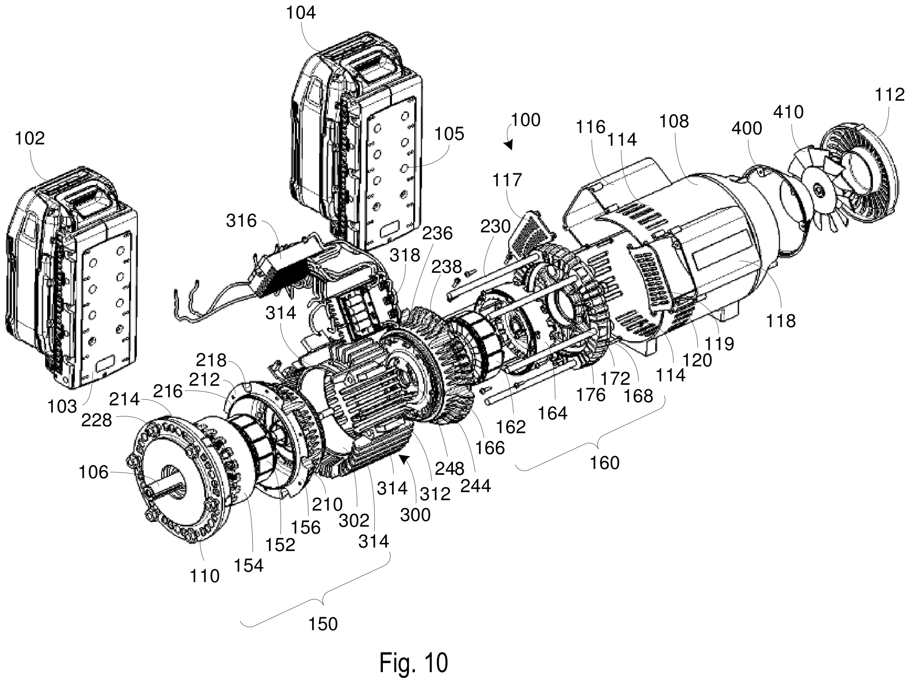

FIGS. 1-13 depict an electric motor 100, according to an example embodiment. FIG. 1 depicts a rear perspective view and FIG. 2 depicts a front perspective view of the electric motor 100 connected to a first battery pack 102 and a second battery pack 104. FIG. 3 depicts a rear view, FIG. 4 depicts a front view, FIG. 5 depicts a left side view, and FIG. 6 depicts a right side view of the electric motor. FIG. 7 depicts a partial, cross-section view of the electric motor 100 along an axial plane that does not include a shaft of the electric motor 100 to illustrate wiring connections between components of the electric motor 100. FIG. 8A and FIG. 8B depict a cross-section view of the electric motor 100. FIG. 9 depicts a perspective exploded view of the electric motor 100 and FIG. 10 depicts a perspective exploded view of the electric motor 100.

As shown in these figures, the electric motor 100 is an electric motor that includes multiple, outer-rotor brushless direct current (BLDC) motors mounted on a shaft 106 (also referred to interchangeably as a motor spindle or motor shaft). The electric motor 100 includes a motor housing 108, a first end cap 110, and a motor cover 112. It should be understood that the term "front" refers to a longitudinal direction along the axial rotation of the shaft 106 towards the motor cover 112 and that the term "rear" refers to a longitudinal direction along the axial rotation of the shaft 106 towards the first end cap 110.

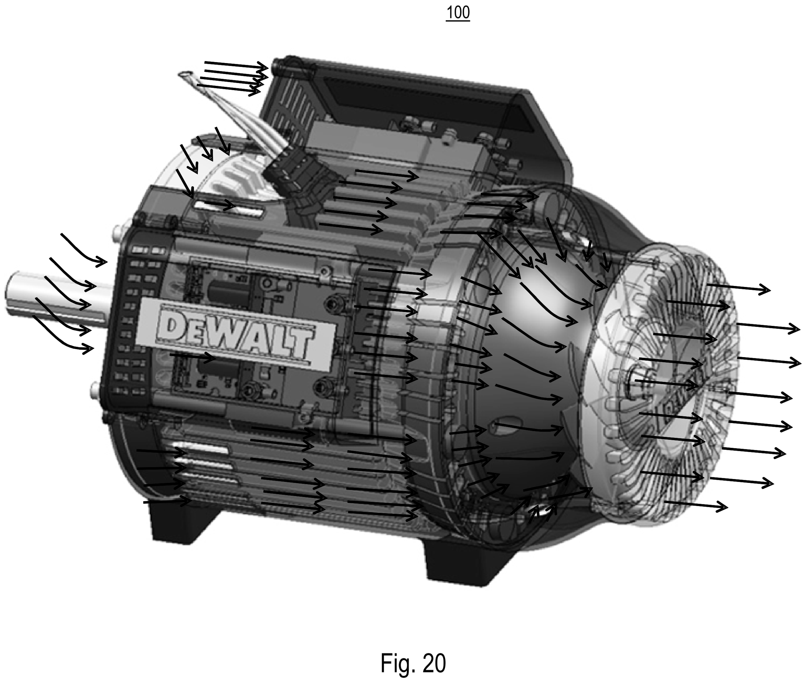

The motor housing 108 forms an outer housing for the electric motor 100 and its components. The first end cap 110 is disposed on one end (the rear) of the motor housing 108 and the motor cover 112 is disposed on the other end (the front) of the motor housing 108. The motor housing 108 includes openings 114 to enable ambient air to enter the motor housing 108 and to flow on the inner surface of the motor housing 108 from the rear of the electric motor 100 to the front of the electric motor 100, as illustrated and discussed in more detail below in FIG. 20. The ambient air that enters through the openings 114 provides air to cool and assist with the thermal management of the motors and components internal to the motor housing 108. The openings 114 may be rectangular-shaped slots that extend along a longitudinal direction of the motor housing 108 from the rear of the motor housing 108 to the front of the motor housing 108 around the circumference or periphery of the motor housing 108. The openings 114 may be disposed closer to the rear of the motor housing 108 than to the front of the motor housing 108. **In** other implementations, the openings 114 may include different-shaped openings and may be disposed in other locations on the motor housing 108.

The motor housing 108 includes a first motor control housing 116 and a second motor control housing 118, which provide an outer housing cover for the motor controllers. The first motor control housing 116 and the second motor control housing 118 each include four sides and a top that may be integrated as part of the motor housing 108 or may be separate housing components that are attachable and detachable to the motor housing 108 through fasteners or other attachment means. For example, one of the sides may be a removeable cover. A first cover 117 having openings 120 encloses a first motor control module in the first motor control housing 116 and a second cover 119 having openings 120 encloses a second motor control module in the second motor control housing 118. The first cover 117 and the second cover 119 may be secured to the first motor control housing 116 and the second motor control housing 118, respectively, using fasteners. The openings 120 may be disposed on one of the sides facing the rear of the motor housing 108, where the openings 120 also allow ambient air to enter to cool the motor controllers, as well as the motors and other components disposed inside the motor housing 108. In this example, the openings 120 are rectangular-shaped slots that are arranged in rows along the rear faces of the first motor control housing 116 and the second motor control housing 118. In other example implementations, the openings 120 may include different-shaped openings and may be disposed in other locations on the first motor control housing 116 and the second motor control housing 118.

The first end cap 110 includes a center opening 122 inside which the shaft 106 is located and protrudes through. A bottom surface of the first end cap 110 includes a projected inner circular surface 124 sized to fit into a circular opening located on a power tool or power equipment to receive the electric motor 100, and an annular outer recessed surface 128 configured to rest on the power tool or power equipment. A series of peripheral through-holes 130 are formed through the annular outer recessed surface 128. A first subset of the peripheral through-holes 130 may be used for securing the electric motor 100 to the power tool or power equipment using fasteners. A second subset of the peripheral through-holes 130 may be used for securing the first end cap 110 to a second end cap 168, as seen in FIGS. 9 and 10, where the second end cap 168 is disposed inside the motor housing 108 via fasteners.

A top surface of the first end cap 110 forms a center bearing pocket 134 (or bearing holder) coaxial with the center opening 122. The center bearing pocket 134 receives a first bearing 136 (also may be referred to as a rear bearing) of the shaft 106 to provide axial and radial support for the shaft 106 relative to the first end cap 110.

The motor cover 112 provides a cover to the motor housing 108 on the front of the electric motor 100. The motor cover 112 includes an annular outer surface 138 and an inner annular surface 140. The annular outer surface 138 includes a series of openings 142 that extend radially outward from a center of the motor cover 112. The openings 142 may provide an exhaust (or an exit path) for air circulating through the inner surface of the motor housing 108. The openings 142 may discharge the ambient air that entered through the openings 114 and the openings 120 and that removed the heat from the electric motor 100 and its components internal to the motor housing 108.

Disposed within the motor housing 108 and located between the first end cap 110 and the motor cover 112 are multiple motors that are mounted to the shaft 106, as best shown in FIGS. 7-10. In this example implementation, a first motor 150 and a second motor 160 are mounted to the shaft 106. As mentioned above, the first motor 150 and the second motor 160 may be outer rotor BLDC motors. In some implementations, the first motor 150 and the second motor 160 are the same type of outer rotor BLDC motor having the same approximate ratings and specifications. In this implementation, the first motor 150 and the second motor 160 are oriented in different directions along the longitudinal direction of the shaft 106 such that the first motor 150 and the second motor 160 face each other. The first motor 150 may be configured to rotate in a direction that is opposite the rotation of the second motor 160 such that when the first motor 150 and the second motor 160 are mounted to the shaft 106 facing each other, the first motor 150 and the second motor 160 drive the shaft 106 to rotate in one direction. That is, the rotational forces generated by the first motor 150 and the second motor 160 are operating in cooperation and are not opposed to each other. In this manner, the combination of the power output from both the first motor 150 and the second motor 160 is a higher output (e.g., approximately double the power output) of a single outer rotor BLDC motor mounted to the shaft 106.

The first motor 150 forms a sealed outer-rotor motor and includes a stator 152, a rotor 154, and a first motor housing 156, where the stator 152 and the rotor 154 are disposed and sealed between first end cap 110 and the first motor housing 156. Similarly, the second motor 160 forms a sealed outer-rotor motor and includes a stator 162, a rotor 164, and a second motor housing 166, where the stator 162 and the rotor 164 are disposed within and sealed between the second motor housing 166 and a second end cap 168. The first motor 150 and the second motor 160 may be similar to and function similar to the deck motor described in U.S. Patent Publication No. 2024/0072586, filed August 22, 2023, which is hereby incorporated by reference in its entirety. The stator 152, the rotor 154, the first motor housing 156, the stator 162, the rotor 164, and the second motor housing 166 are described in general here below, but additional example details regarding each of these components may be found in U.S. Patent Publication No. 2024/0072586 as incorporated by reference above.

In an embodiment, the first motor housing 156 mates with the first end cap 110 around the stator 152 and the rotor 154 to form a fully-sealed motor to substantially block ingress of liquid and air into the first motor 150. Although not shown, O-rings may be disposed between the first motor housing 156 and the first end cap 110. In an embodiment, these seals provide a substantially and/or fully watertight and a substantially and/or fully airtight motor housing around the internal motor components including the stator 152 and the rotor 154, with no air inlets or outlets to allow ingress of water or air inside the first motor 150.

Similarly, in an embodiment, the second motor housing 166 mates with the second end cap 168 around the stator 162 and the rotor 164 to form a fully-sealed motor to substantially block ingress of liquid and air into the second motor 160. Although not shown, O-rings may be disposed between the second motor housing 166 and the second end cap 168. In an embodiment, these seals provide a substantially and/or fully watertight and a substantially and/or fully airtight motor housing around the internal motor components including the stator 162 and the rotor 164, with no air inlets or outlets to allow ingress of water or air inside the second motor 160.

In an embodiment, the first motor housing 156 includes an outer annular body 210 formed around the stator 152 and the rotor 154; a flange 212 projecting outwardly from the outer annular body 210 to form approximately the same outer diameter as an annular peripheral projection 214 of the first end cap 110 configured to rest on a top surface of the annular peripheral projection 214 and form a substantially flush outer surface with the annular peripheral projection 214; and an annular projection 216 projecting from the bottom surface of the flange 212. In an embodiment, the annular projection 216 is securely received, e.g. via press-fitting or slip-fitting, inside the annular peripheral projection 214 of the first end cap 110 to form a seal between the first motor housing 156 and the first end cap 110.

In an embodiment, the first motor housing 156 includes a series of peripheral through-holes 218 formed through the flange 212 that align with corresponding the second subset of the peripheral through-holes 228 of the first end cap 110 and through which a series of fasteners 230 is received. As seen best in FIGS. 9 and 10, the series of fasteners 230 extend along the length of the electric motor 100 to assemble and hold the first motor 150, the second motor 160, and an adaptor 300 together. The series of fasteners 230 may include multiple fasteners in the form of elongated rods. In an embodiment, the series of fasteners 230 includes six (6) fasteners. In other examples, the series of fasteners 230 may include fewer or more fasteners to hold the assembly together.

In an embodiment, the first motor housing 156 is made of heat conductive material such as aluminum, thus acting as a heat sink for the deck motor components. In an embodiment, the annular body of the first motor housing 156 includes a sloped outer surface and a series of fins 220 that extend longitudinally along the outer surface for improved heat transfer from the first motor 150. In an embodiment, fins 220 include sloped outer edges that extend from the flange 212.

In an embodiment, the first motor housing 156 further includes an inner annular body 222 provided radially inwardly of the outer annular body 210 and forming a center opening 224 therein for receiving the shaft 106. In an embodiment, the inner annular body 222 may include support for a sense magnet received through the center opening 224 on an upper side of the first motor housing 156. Further, in an embodiment, a front portion of the inner annular body 222 forms a stator mount onto which the stator 152 is mounted.

In an embodiment, an upper portion of the outer annular body 210 of the first motor housing 156 includes a stepped portion that leads to formation of an annular wall, where the annular wall includes an annular groove formed therein at a distance above the stepped portion.

Similar to the first motor housing 156, the second motor housing 166 includes the same features and functionality, as described above with respect to the first motor housing 156. In an embodiment, the second motor housing 166 includes an outer annular body 236 formed around the stator 162 and the rotor 164; a flange 238 projecting outwardly from the outer annular body 236 to form approximately the same outer diameter as an annular peripheral projection 239 of the second end cap 168 configured to rest on a top surface of the annular peripheral projection 239 and form a substantially flush outer surface with the annular peripheral projection 239; and an annular projection 240 projecting from the bottom surface of the flange 238. In an embodiment, the annular projection 240 is securely received, e.g. via press-fitting or slip-fitting, inside the annular peripheral projection 239 of the second end cap 168 to form a seal between the second motor housing 166 and the second end cap 168.

In an embodiment, the second motor housing 166 includes a series of peripheral through-holes 242 formed through the flange 238 that align with corresponding the second subset of the peripheral through-holes of the second end cap 168 and through which the series of fasteners 230 are received.

In an embodiment, the second motor housing 166 is made of heat conductive material such as aluminum, thus acting as a heat sink for the deck motor components. In an embodiment, the annular body of the second motor housing 166 includes a sloped outer surface and a series of fins 244 that extend longitudinally along the outer surface for improved heat transfer from second motor 160. In an embodiment, fins 244 include sloped outer edges that extend from the flange 238.

In an embodiment, the second motor housing 166 further includes an inner annular body 246 provided radially inwardly of the outer annular body 236 and forming a center opening 248 therein for receiving the shaft 106. In an embodiment, the inner annular body 246 may include support for a sense magnet received through the center opening 248 on an upper side of the second motor housing 166. Further, in an embodiment, a front portion of the inner annular body 246 forms a stator mount onto which the stator 162 is mounted.

In an embodiment, an upper portion of the outer annular body 236 of the second motor housing 166 includes a stepped portion that leads to formation of an annular wall, where the annular wall includes an annular groove formed therein at a distance above the stepped portion.

The stator 152 and the stator 162 are provided as inner stators in the respective motors and include a stator lamination stack (also referred to as a stator core) having a ring-shaped stator bore and a plurality of stator teeth radially projecting outwardly from the stator bore with slots formed therebetween. Stator windings are wound around the stator teeth defining the phases of the first motor 150 and the second motor 160. In an embodiment, the stator 152 and the stator 162 can further include one or more end insulators covering end surfaces of the stator lamination stack to electrically insulate the stator windings from the stator lamination stack.

In an embodiment, where the first motor 150 and the second motor 160 are three-phase motors and include 12 stator coils, the stator 152 and the stator 162 will constitute three groups (i.e., phases) each with four stator windings connected together on or around the stator bore. The individual stator windings within each phase may be electrically connected together in a series or a parallel connection, and the three phases of windings may be electrically connected together in a wye or a delta configuration. In one embodiment, both of the stator windings may be configured in a parallel-series delta pattern, with four stator windings within each of the motors, where two of the windings are connected in parallel forming a set and two of the sets are connected in series.

The stator 152 is mounted to the inside of the first end cap 110. The stator 152 is rotationally and axially fixed to the first end cap 110. In a similar manner, the stator 162 is mounted to the inside of the second end cap 168. The stator 162 is rotationally and axially fixed to the second end cap 168.

The rotor 154 and the rotor 164 are provided as an outer rotor including an inner annular member, an outer annular core, and a radial wall extending between the two. The inner annular member includes an inner through-hole that is securely mounted over the shaft 106 by press-fitting or other known means. The outer annular cores for the rotor 154 and the rotor 164 are provided with a larger diameter than the stator 152 and the stator 162, respectively, so as to circumferentially surround the stator 152 and the stator 162 with a small airgap therebetween. The outer annular core supports a series of permanent magnets that magnetically interact with the stator windings, causing rotation of the rotor 154 around the stator 152 and the rotor 164 around the stator 162 when the stator windings are sequentially energized. In an embodiment, the rotor 154 and the rotor 164 as used in the first motor 150 and the second motor 160, respectively, are ten pole rotors and include a series of ten permanent magnets. In an embodiment, an overmold structure may at least partially cover and secure the permanent magnets to the outer annular core. In an embodiment, a series of fasteners axially fasten the overmold structure to the outer annular core.

In an embodiment, the radial wall extends includes a series of peripheral openings that extend partially into the outer annular core. In an embodiment, a series of ribs project inwardly between the peripheral openings that generate an airflow through the first motor 150 and the second motor 160, respectively, for cooling of the motor components. It should be understood that the radial wall may alternatively include angular blades or other known features capable of generating an airflow with rotation of the rotor 154 and the rotor 164. While the first motor 150 and the second motor 160 are fully sealed and include no air inlets or outlets, the airflow generated by the rotor 154 and the rotor 164 through the first motor 150 and the second motor 160, respectively, sufficiently cool the stator windings of the stator 152 and the stator 162 and other motor components to stay within thermal limits during normal operations of power tool or power equipment to which the electric motor 100 is attached.

The second end cap 168 includes a center opening 170. A top surface of the second end cap 168 forms a center bearing pocket 172 (or bearing holder) coaxial with the center opening 170. The center bearing pocket 172 receives a second bearing 174 (also may be referred to as a front bearing) of the shaft 106 to provide axial and radial support for the shaft 106 relative to the second end cap 168. In an implementation, the second end cap 168 may be made of heat conductive material such as aluminium, thus acting as a heat sink for the second motor 160 and the electric motor 100 in general. The second end cap 168 includes a series of fins 176 that extend radially outward from and longitudinally along the outer surface of the second end cap 168 for improved heat transfer from the second motor 160 and the electric motor 100.

In this arrangement, the first end cap 110 forms a front wall of the electric motor 100 and the second end cap 168 forms a rear wall of the electric motor 100.

In an embodiment, during the rotor assembly process, the inner annular member for the rotor 154 is mounted on the shaft 106 via the first bearing 136, which may be, for example, a bushing press-fitted onto the shaft 106. Similarly, the inner annular member for the rotor 164 is mounted on the shaft 106 via the second bearing 174, which may be, for example, a bushing press-fitted onto the shaft 106. The shaft 106 may include keyway features that the bushings are keyed into to synchronize the rotor 154 and the rotor 164 with the shaft 106. The shaft 106 extends through both the first motor 150 and the second motor 160. The shaft 106 provides a mechanical coupling between the first motor 150 and the second motor 160.

The electric motor 100 includes an adaptor 300. The adaptor 300 provides a mounting mechanism and forms a housing for the first motor 150 and the second motor 160. The adaptor 300 also may function as a heat sink to provide thermal management and transfer heat from the first motor 150 and the second motor 160. The adaptor 300 also provides a support structure for mounting one or more motor controllers and a conduit to route wiring from the one or more motor controllers to the first motor 150 and the second motor 160.

In an embodiment, the adaptor 300 includes an inner annular body 302 and an outer annular body 304. The inner annular body 302 is configured to contour to the outer surfaces of the first motor housing 156 and the second motor housing 166. That is, one end of the inner annular body 302 is configured to contour to the outer surfaces of the first motor housing 156. The other end of the inner annular body 302 is configured to contour to the outer surfaces of the second motor housing 166. The outer surfaces of the first motor housing 156 and the second motor housing 166 are not cylindrical but are stepped or more conical-shaped. The inner annular body 302 is shaped to mate with the stepped or conical-shaped outer surfaces of the first motor housing 156 and the second motor housing 166.

As best seen in FIG. 8B, in an example embodiment, the inner annular body 302 includes multiple stepped portions on each end to match the stepped (e.g., nearly conical) profiles of the first motor housing 156 and the second motor housing 166. For example, the inner annular body 302 includes first stepped portions 319 (i.e., one on each end of the inner annular body 302) that align with the rear ends of the first motor housing 156 and the second motor housing 166 and the peripheral through-holes 218 and peripheral through-holes 242 that couple the first end cap 110 and the second end cap 168. The inner annular body 302 includes second stepped portions 321 (i.e., one on each end of the inner annular body 302) forward of the peripheral through-holes 218 and the peripheral through-holes 242. The inner annular body 302 includes third stepped portions 323 (i.e., one on each end of the inner annular body 302) that extend past the front ends of the stator 152 and the stator 162. The inner annular body 302 includes fourth stepped portions 325 (i.e., one on each end of the inner annular body 302) that lead to a cylindrical inner body 327 extending between the first motor housing 156 and the second motor housing 166. In this manner, the adaptor 300 pilots and supports the first motor housing 156 and the second motor housing 166. In this manner, the structure that supports the stator 152 and the stator 162 (i.e., the adaptor 300) is closer to the center of the electric motor 100 compared to the structures that support the rotor 154 and the rotor 164 (i.e., the first end cap 110 and the second end cap 168, respectively), which are the ends of the electric motor 100.

In this example embodiment, also as seen in FIG. 8B, there are O-rings 329 disposed between inner annular body 302 and the first motor housing 156 and the second motor housing 166. The O-rings 329 absorb stack-up tolerances and also provide for ingress protection to prevent environmental or other contaminants from entering in the adaptor 300 between the first motor 150 and the second motor 160.

In an embodiment, an outer diameter of the outer annular body 304 of the adaptor 300 may be the same or smaller than an outer diameter of the first end cap 110 and the second end cap 168.

The outer annular body 304 includes a series of fins 310 that project radially outward and that extend longitudinally along the outer annular body 304 for improved heat transfer from the first motor 150 and the second motor 160. The outer annular body 304 includes fin projections 312 (e.g., six) having through-holes 314. The fin projections 312 with the through-holes 314 enable the first motor 150 and the second motor 160 to be fastened to the adaptor 300 to hold the first motor housing 156 to one end of the adaptor 300 and the second motor housing 166 to the other end of the adaptor 300 using the series of fasteners 230. As discussed above, in this example embodiment the series of fasteners 230 includes six (6) fasteners that are in the form of elongated cylindrical rods.

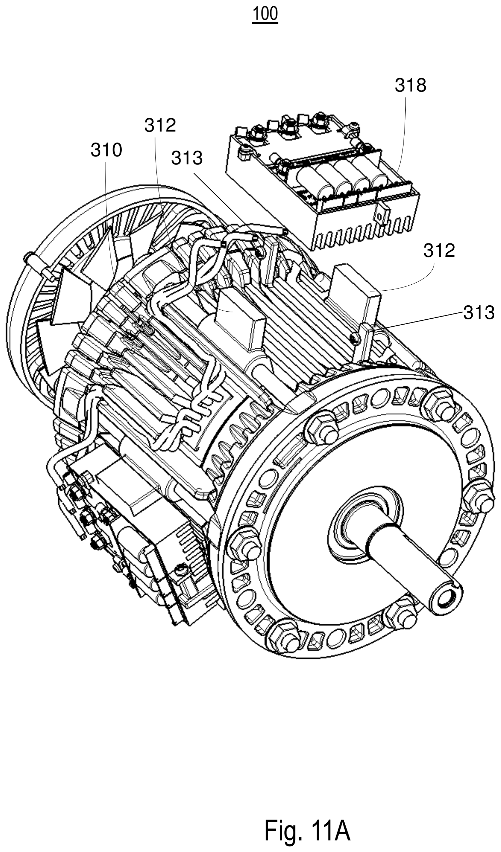

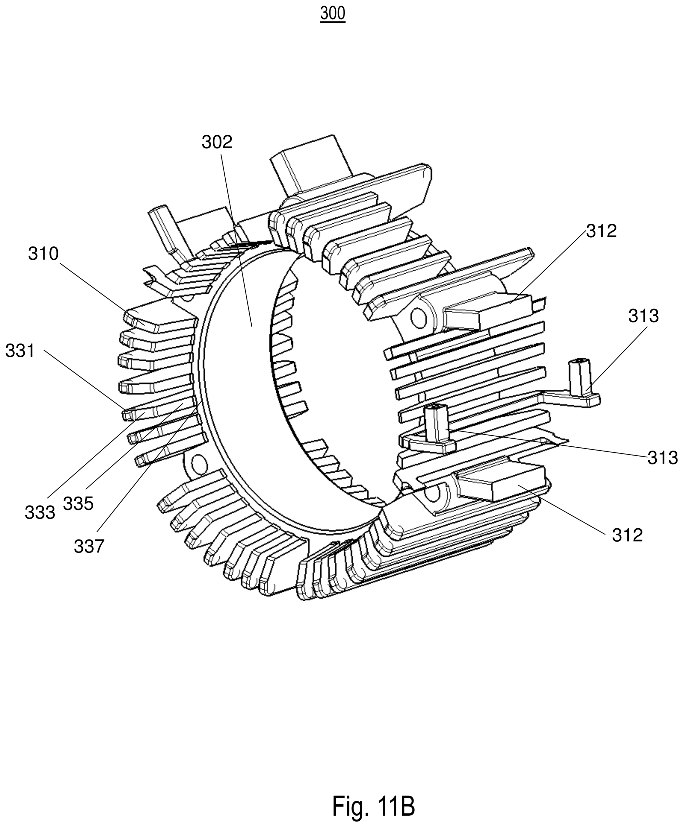

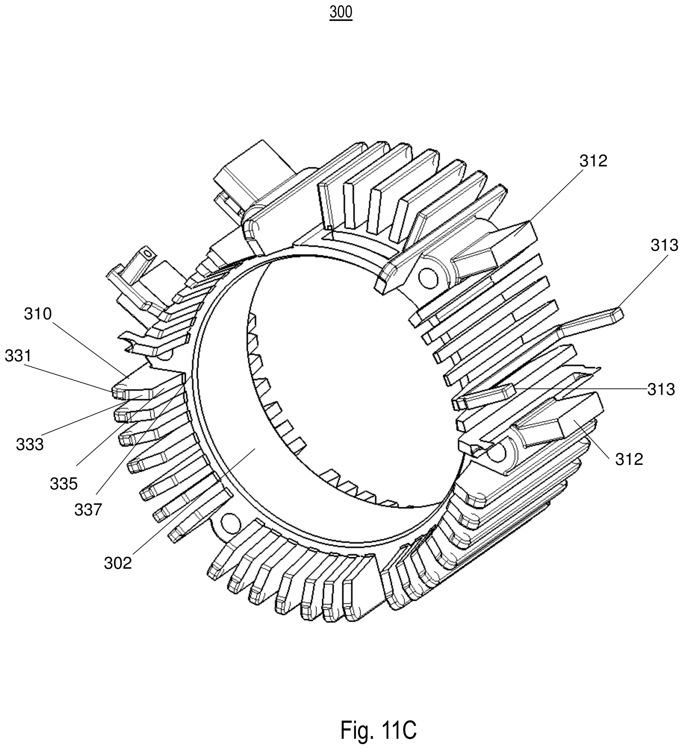

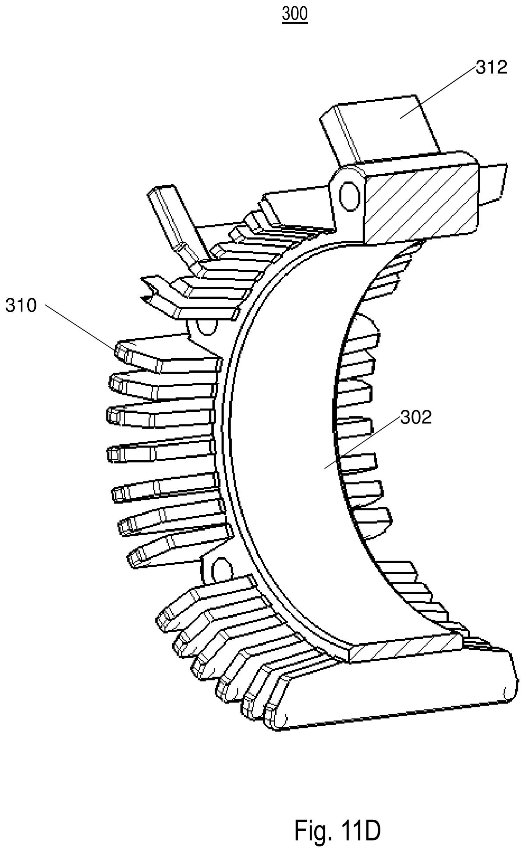

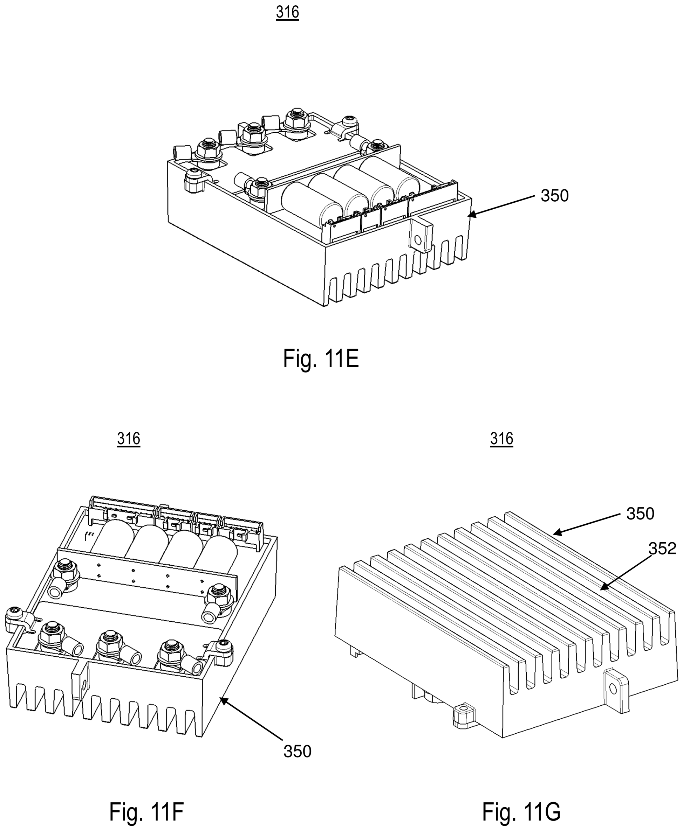

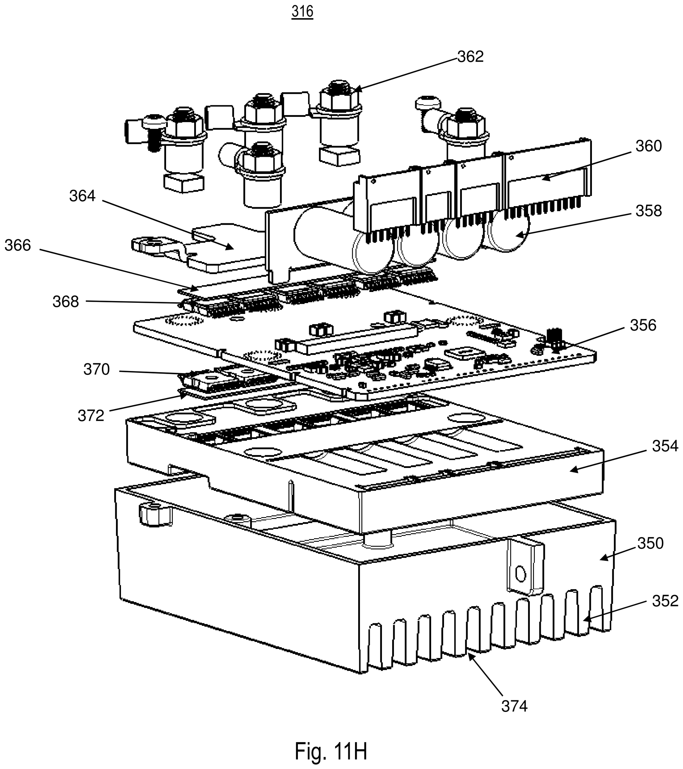

FIG. 11A depicts a perspective, partially exploded view of the electric motor 100 with the second motor control module 318 in an exploded view. FIG. 11B depicts a front, right top perspective view of the adaptor 300 of the electric motor 100. FIG. 11C depicts a rear, left top perspective view of the adaptor 300 of the electric motor 100. FIG. 11D depicts a cross-section view of the adaptor 300 of FIG. 11B. FIG. 11E depicts a perspective view of a motor control module 316. FIG. 11F depicts a perspective view of a motor control module 316. FIG. 11G depicts a perspective view of a motor control module 316. FIG. 11H depicts an exploded view of a motor control module 316.

As seen in Figs. 11A-11D, pairs of the fin projections 312 also function to hold a motor control module secured to the outer annular body 304 of the adaptor 300. In this embodiment, the electric motor 100 includes a first motor control module 316 and a second motor control module 318. The first motor control module 316 and the second motor control module 318 are used to separately control the supply of electric power to the first motor 150 and the second motor 160, respectively. In addition to the fin projections 312, posts 313 may be used to secure the first motor control module 316 and the first motor control module 316 to the adaptor 300. Fasteners (e.g., screws) may be used to fasten the first motor control module 316 and the second motor control module 318 to the posts 313.

In an embodiment, the fins 310 may provide stepped portions that secure the first motor housing 156 and the second motor housing 166 to the adaptor 300 instead of the inner annular body 302 having stepped portions, as discussed above. Each of the fins 310 may be shaped and contoured to slope inwards towards the inner annular body 302 and match the profile of the first motor housing 156 and the second motor housing 166. For example, multiple fins 310 may include a first stepped portion 331, a second stepped portion 333, and a third stepped portion 335, with a fourth stepped portion 337 being the inner annular body 302.

Figs. 11E-11H illustrate a first motor control module 316. The first motor control module 316 (and also the second motor control module 318) may include housing 350 forming a potting board, where the housing 350 includes a series of fins 352. The first motor control module 316 includes potting material 354, a circuit board 356, capacitors 358, wires connectors 360, phase wiring connectors 362, a flat heat sink 364, an upper gap pad 366, uppers MOSFETs 368, lower MOSFETs 370, and a lower gap pad 372.

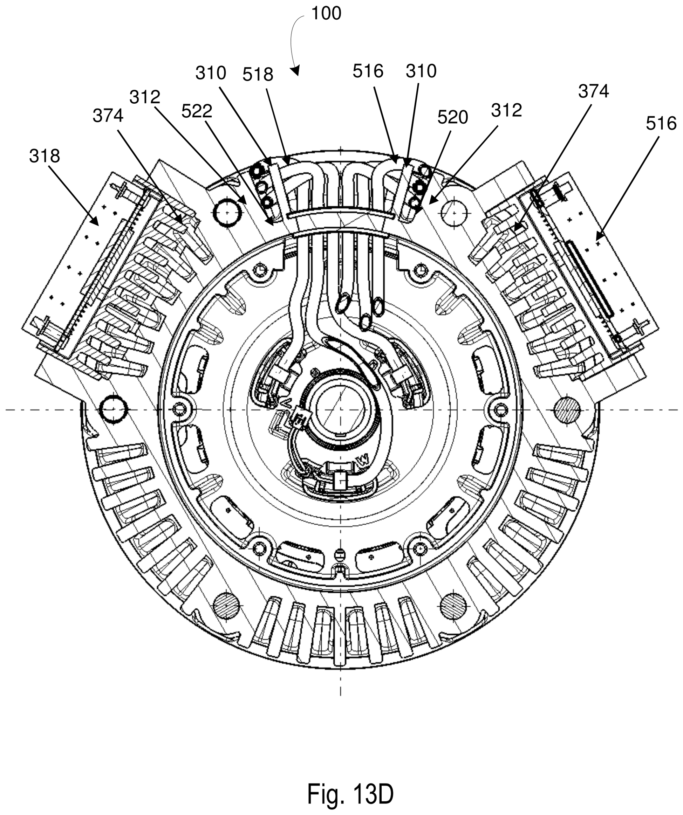

The lower surface of the housing 350 includes fins 352 that extend along the longitudinal axis of the electric motor 100. When mounted between fin projections 312, the fins 352 and the fins 310 of the adaptor 300 come into contact to form air channels 374 in between, as can also be seen in FIG. 13D. The air channels 374 are in fluid communication with the fan 410 to cool the first motor control module 316, the second motor control module 318, and the adaptor 300 together.

In an embodiment, the outer surface of the adaptor between the fin projections 312 includes a substantially flat contour formed by outer ends of the fins to form mounting platforms for the two modules.

The motor housing 108 has cut-out regions under the motor control housings 116 and 118, which allow the modules to be in contact with the adaptor. The modules circumferentially intersect the cylindrical surface of the motor housing 108.

The electric motor 100 also includes a baffle 400 and a fan 410. The baffle 400 is secured to the second end cap 168 and is a conical-shaped structure that is configured to draw and focus the ambient air drawn in by the fan 410 across the first motor 150, the adaptor 300, and the second motor 160. The baffle 400 is disposed within the motor housing 108. The fan 410 is connected to the shaft 106 and rotates with the shaft 106 to draw in the ambient air through the openings 114 of the motor housing 108 and the openings 120 of the first motor control housing 116 and the second motor control housing 118. The first motor housing 156 having the fins 176, the second motor housing 166 having the fins 220, the second end cap 168 having the fins 244, and the adaptor 300 having the fins 310 all provide thermal management to remove the heat from the first motor 150 and the second motor 160 and their components as the ambient air is drawn across these components by the fan 410. FIG. 20 illustrates an example of the air flow in this manner with the arrows providing a direction of the air flow through the interior of the motor housing 108.

In an embodiment, the electric motor 100 is powered by multiple battery packs, including the first battery pack 102 and the second battery pack 104. The first battery pack 102 mates (e.g., slidably engages) with a first battery pack interface 103 and the second battery pack 104 mates (e.g., slidably engages) with a second battery pack interface 105. The first battery pack interface 103 and the second battery pack interface 105 may be mounted to the power tool or power equipment. Wires from the first battery pack interface 103 and the second battery pack interface 105 electrically connect the first battery pack 102 and the second battery pack 104 to the first motor control module 316 and the second motor control module 318, respectively. In this example, the first battery pack 102 provides power to the first motor 150 through the first motor control module 316 and the second battery pack 104 provides power to the second motor 160 through the second motor control module 318. In this manner, the first motor 150 and the second motor 160 may be electrically independent of each other. The first motor 150 and the second motor 160 are mechanically coupled together by being mounted on the shaft 106 and both the first motor 150 and the second motor 160 are supported and piloted by the adaptor 300.

In an embodiment, the first battery pack 102 and the second battery pack 104 may be the same type of battery pack and may have the same nominal voltage. For example, the first battery pack 102 and the second battery pack 104 may be 60V battery packs. In another embodiment, the first battery pack 102 and the second battery pack 104 may be different types of battery packs from each other. For example, the first battery pack 102 may be a 20V battery pack and the second battery pack 104 may be a 60V battery pack. In another embodiment, the first battery pack 102 and the second battery pack 104 may use a different type of battery pack interface. In another embodiment, the first battery pack 102 and the second battery pack 104 may have different battery capacities.

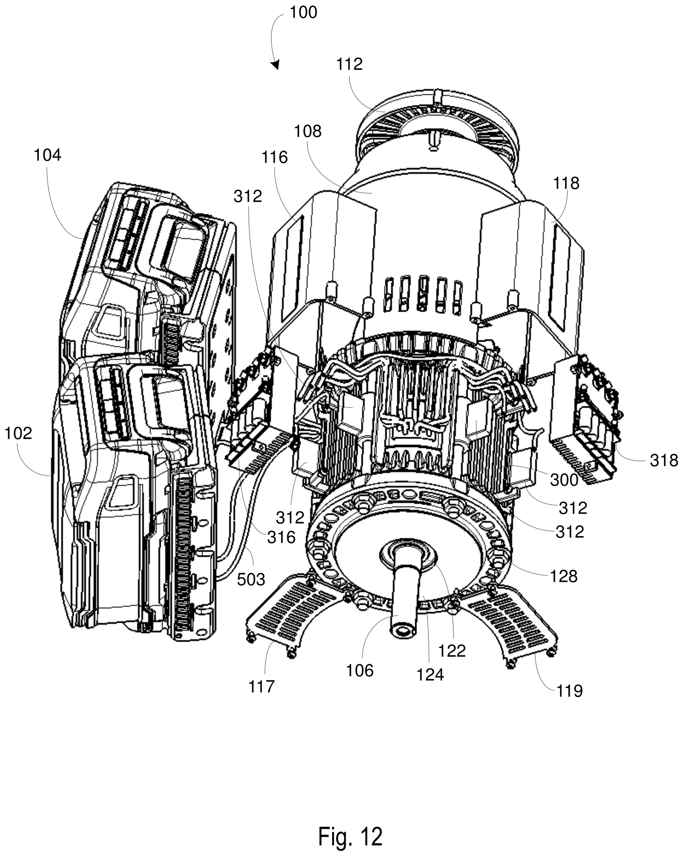

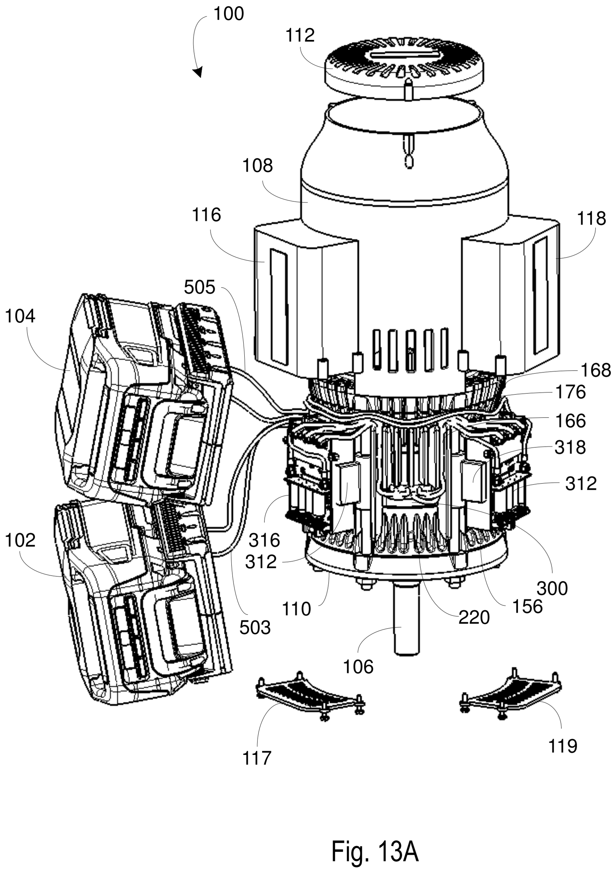

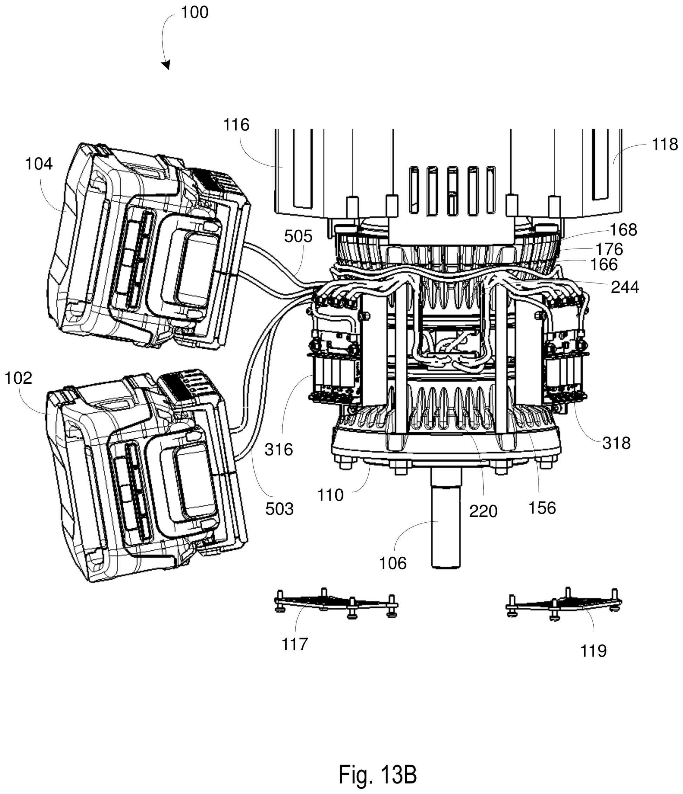

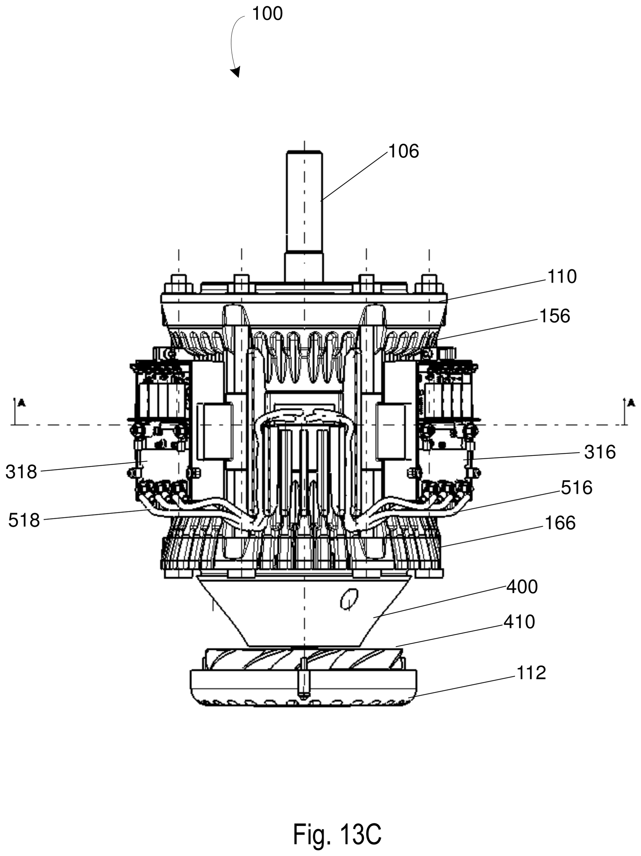

FIG. 12, FIG. 13A, FIG. 13B, FIG. 13C, and FIG. 13D illustrate views that show the wire management from the first battery pack 102 and the second battery pack 104 and within the electric motor 100. FIG. 12 depicts a top perspective, partially exploded view of the electric motor 100, the first battery pack 102, and the second battery pack 104, FIG. 13A depicts a top partially exploded view of the electric motor 100, the first battery pack 102, and the second battery pack 104, and FIG. 13B depicts a top partially exploded, zoomed-in view of the electric motor 100, the first battery pack 102, and the second battery pack 104 with the adaptor 300 removed. FIG. 13C depicts a top view of the electric motor of FIG. 1 without the motor housing, according to an embodiment. FIG. 13D depicts a cross-section view of the electric motor of FIG. 13C taken along the line A-A, according to an embodiment.

As illustrated and best seen in FIG, 7, FIG. 13A and FIG. 13B, the wires 503 run from the first battery pack interface 103 to the first motor control module 316 and the wires 505 run from the second battery pack interface 105 to the second motor control module 318. Then, as best seen in Figs. 13C and 13D, the phase wires 516 run from the first motor control module 316 to the first motor 150 and the phase wires 518 run from the second motor control module 318 to the second motor 160. The phase wires 516 and the phase wires 518 are run in the gap between the inner surface of the motor housing 108 and the outer surfaces of the first motor housing 156, the second motor housing 166, and the adaptor 300. As seen in FIG. 13D, the phase wires 516 may be constrained inside a channel 520 that is formed between the fin projections 312 and the fins 310 and the phase wires 518 may be constrained between inside a channel 522 that is formed between the fin projections 312 and the fins 310.

The first motor control module 316 is disposed within the first motor control housing 116 and the second motor control module 318 is disposed within the second motor control housing 118.

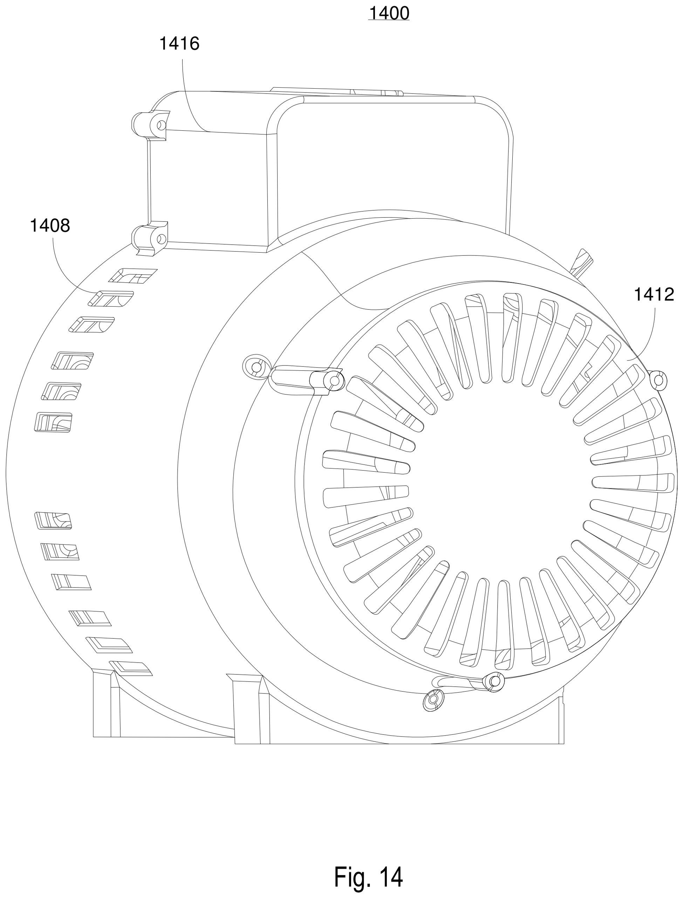

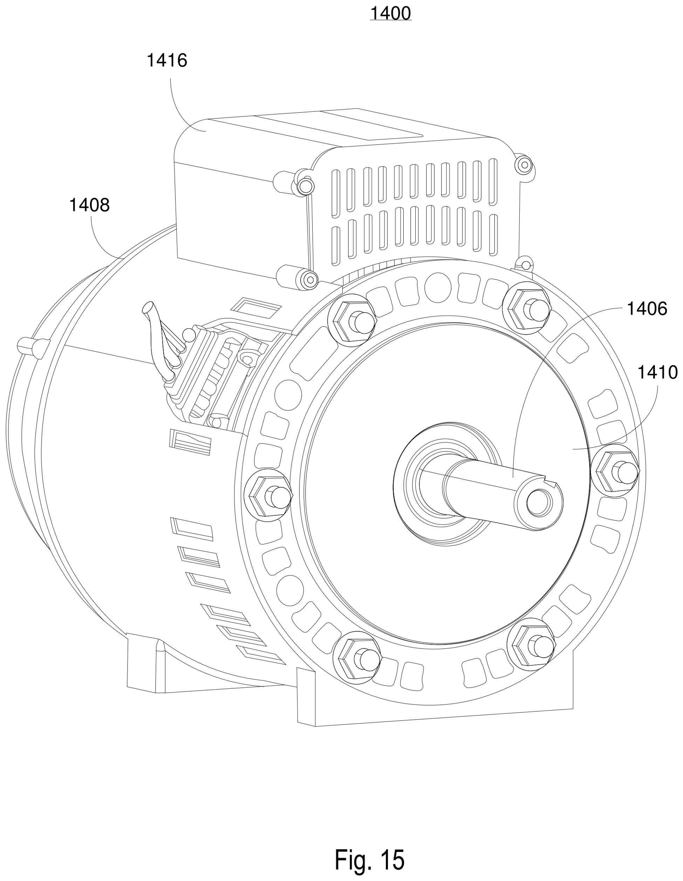

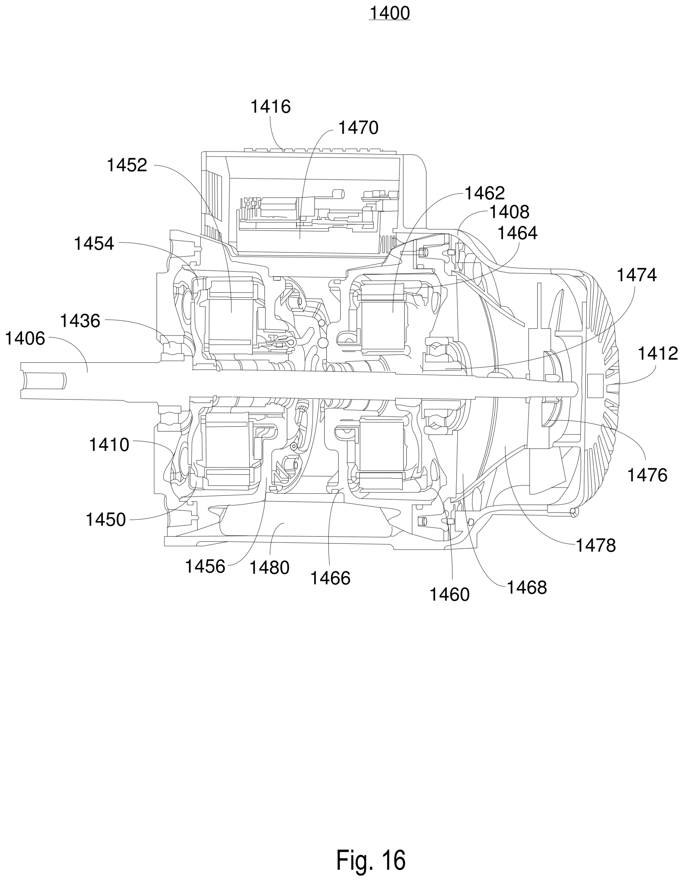

FIGS. 14-16 depict another embodiment of an electric motor 1400. FIG. 14 depicts a front perspective view of the electric motor 1400, FIG. 15 depicts a rear perspective view of the electric motor 1400, and FIG. 16 depicts a cross-section view of the electric motor 1400. Similar to the electric motor 100, the electric motor 1400 includes two motors, namely a first motor 1450 and a second motor 1460. The first motor 1450 and the second motor 1460 are arranged and assembled in the same orientation as the first motor 150 and the second motor 160 in the electric motor 100. The electric motor includes a shaft 1406 that goes through both the first motor 1450 and the second motor 1460 such that the first motor 1450 and the second motor 1460 are mounted to the shaft 1406. The first motor 1450 includes a stator 1452, a rotor 1454, a first motor housing 1456, and a first end cap 1410. A first bearing 1436 is disposed in the first end cap 1410 and is keyed to the shaft 1406, in the same manner the components of the first motor 150 are arranged. Similarly, the second motor 1460 includes a stator 1462, a rotor 1464, a second motor housing 1466, and a second end cap 1468. A second bearing 1474 is disposed in the second end cap 1468 and is keyed to the shaft 1406. A motor cover 1412 covers a fan 1476 and a baffle 1478, where the fan 1476 and the baffle 1478 are external to the first motor 1450 and the second motor 1460.

A difference between the electric motor 100 and the electric motor 1400 is that the electric motor 1400 has one motor controller instead of two motor controllers. That is electric motor 1400 includes a motor controller 1470 that controls the power delivery to both the first motor 1450 and the second motor 1460. An adaptor 1480 is configured to secure the motor controller 1470 and a motor housing 1408 includes a motor control housing 1416 to enclose the motor controller 1470. In this manner, the adaptor 1480 and the motor housing 1408 are different than the adaptor 300 and motor housing 108 because there is only one motor controller 1470.

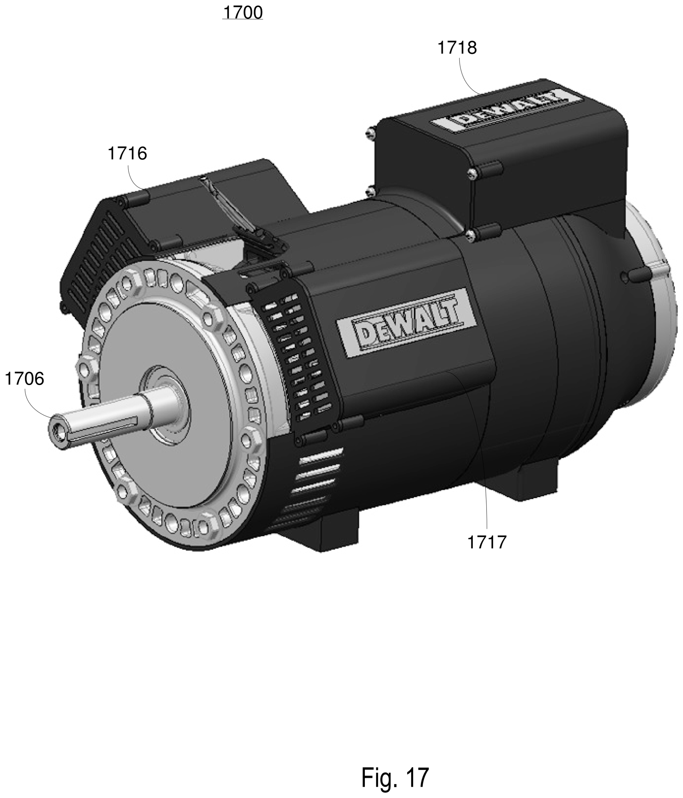

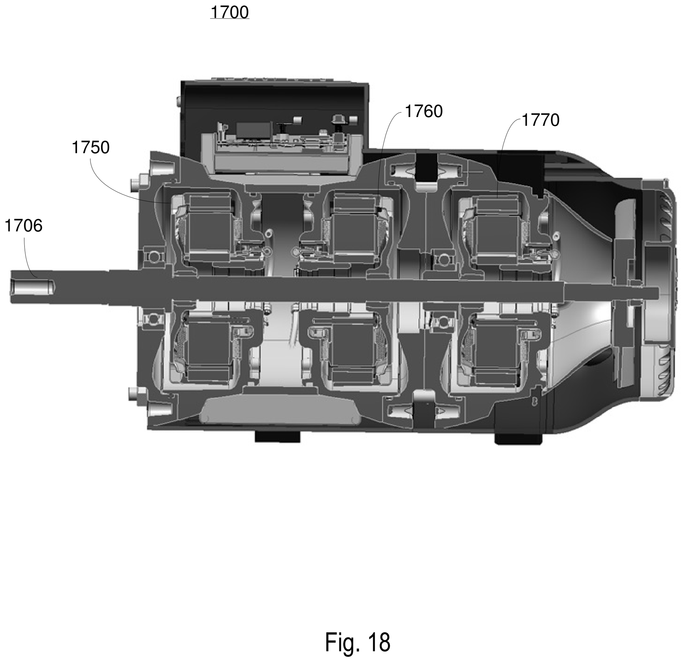

FIGS. 17 and 18 depict another embodiment of an electric motor 1700. FIG. 17 depicts a rear perspective view of the electric motor 1700 and FIG. 18 depicts a cross-section view of the electric motor 1700. In this embodiment, the electric motor 1700 includes three (3) motors and three (3) motor control modules. A first motor 1750, a second motor 1760, and a third motor 1770 are mounted to a shaft 1706. In an embodiment, the first motor 1750 and the third motor 1770 are oriented in a same direction and the second motor 1760 is oriented in an opposite direction. That is, the first motor 1750 and the second motor 1760 face each other and the second motor 1760 and the third motor 1770 abut each other, with the first motor 1750 and the third motor 1770 facing in a same direction.

In an embodiment, the electric motor 1700 includes a first motor control module inside a first motor control housing 1716 for controlling the first motor 1750, a second motor control module inside a second motor control housing 1717 for controller the second motor 1760, and a third motor control module inside a third motor control housing 1718 for controlling the third motor 1770.

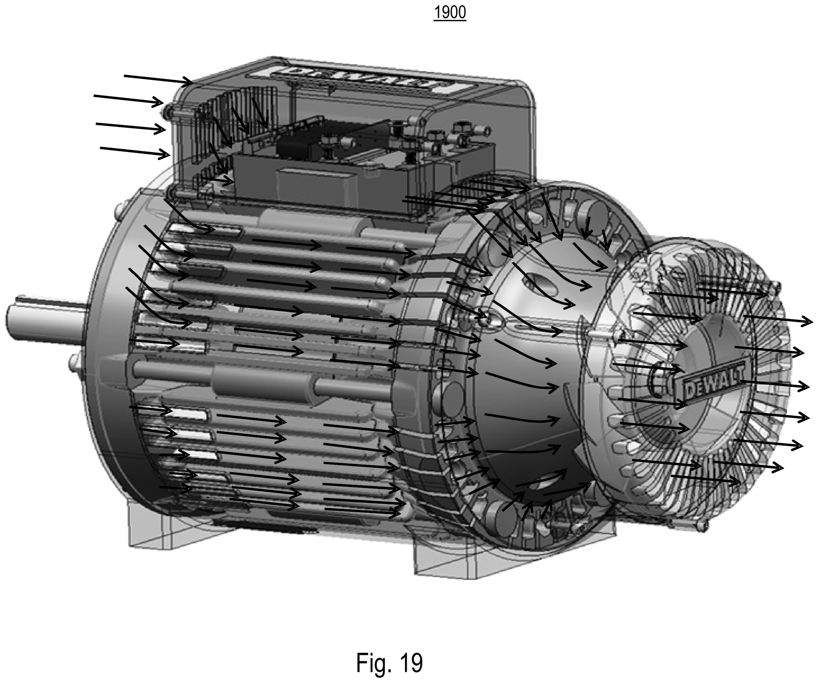

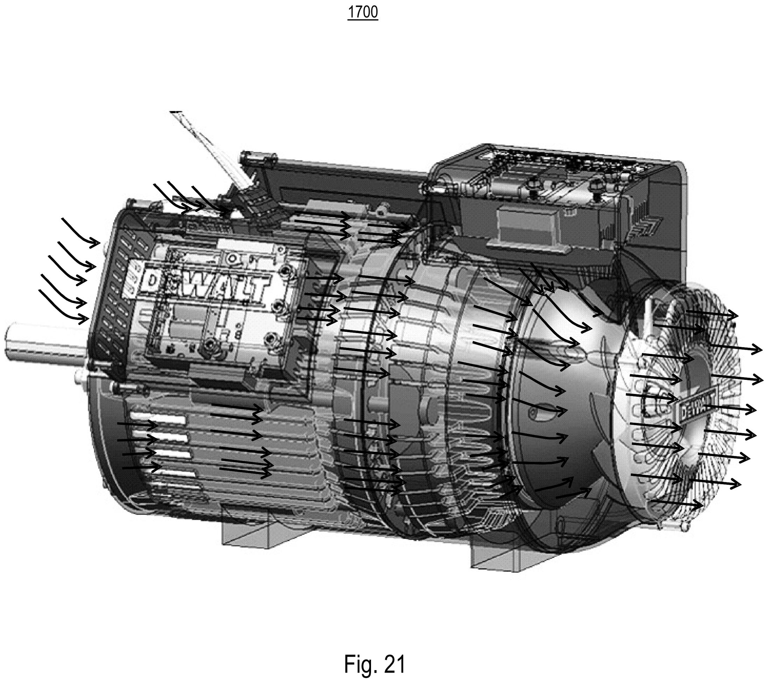

FIG. 19 depicts a perspective view of the electric motor 1400 of FIG. 14 illustrating an air flow pattern with the motor housing removed. FIG. 20 depicts a perspective view of the electric motor 100 of FIG. 1 illustrating an air flow pattern with the electric motor housing removed, according to an embodiment. FIG. 21 depicts a perspective view of the electric motor 1700 of FIG. 17 illustrating an air flow pattern with the electric motor housing removed.

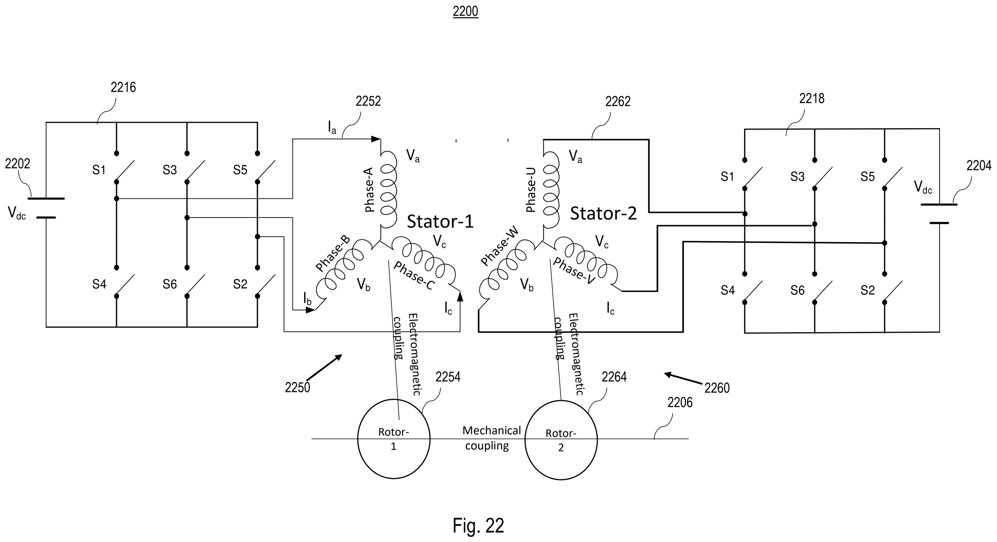

FIG. 22 depicts a schematic diagram of an electric motor 2200. In this example, the electric motor 2200 includes two (2) motors that are powered by two (2) battery packs via two (2) motor control modules that are mechanically coupled via a shaft 2206 and that are electrically isolated from each other. The electric motor 2200 may represent a schematic diagram of the electric motor 100 of FIGS. 1-13. That is, the electric motor 2200 includes a first motor 2250 having a stator 2252 electromagnetically coupled to a rotor 2254 and a second motor 2260 having a stator 2262 electromagnetically coupled a rotor 2264. The first motor 2250 is powered and driven by a first battery pack 2202 via a first motor control module 2216 and the second motor 2260 is powered and driven by a second battery pack 2204 via a second motor control module 2218. In an embodiment, the first motor control module 2216 may be a first inverter circuit and the second motor control module 2218 may be a second inverter circuit.

The stator 2252 and the stator 2262 may be in the same or different electrical configurations. For example, as illustrated in FIG. 22, the stator 2252 and the stator 2262 are both in a wye configuration, with the stator 2252 having three phases (e.g., phase A, phase B, and phase C) and the stator 2262 having three phases (e.g., phase U, phase V, and phase W). In other example embodiments, the stator 2252 and the stator 2262 may both have a delta configuration. Still, in other example embodiments, the stator 2252 may be in a wye configuration and the stator 2262 may be in a delta configuration. In all of these examples, the stator 2252 and the stator 2262 may be electrically isolated from each other. As discussed above, with respect to the electric motor 100, the first motor 150 and the second motor 160 may face each other and it is desirable to have both the first motor 150 and the second motor 160 rotate in a same direction so that they are acting on the shaft 106 together and not working against each other. To achieve the same rotational forces acting on the shaft 106, the first motor 150 and the second motor 160 are essentially driven opposite each other since they facing each other. That is, the connections for the phase wires 516 for the first motor 150 may be wired in a first manner and the phase wires 518 for the second motor 160 may be wired in a second manner that is different from the first manner so that the first motor 150 and the second motor 160, which are facing each other, rotate the shaft 106 in a same direction.

In this embodiment having a first motor control module 2216 and a second motor control module 2218, the first motor 2250 and the second motor 2260 may be both mechanically and electrically synchronized. That is, the rotor 2254 and the rotor 2264 are mechanically synchronized through the individual rotor coupling to the shaft 2206. The stator 2252 and the stator 2262 may be in phase with each other even though they are individually controlled by separate motor control modules. In this manner, the back-EMF from the first motor 2250 and the back-EMF from the second motor 2260 are in phase (almost zero phase shift) with each other. That is, the back-EMF of phase A of the stator 2252 is in phase with the back-EMF of phase U of the stator 2262, the back-EMF of phase B is in phase with the back-EMF of phase W, and the back-EMF of phase C is in phase with the back-EMF of phase V.

In this embodiment having the first motor control module 2216 and the second motor control module 2218, the first motor 2250 and the second motor 2260 may be configured such that the back-EMF from the first motor 2250 is not in phase with the back-EMF of the second motor 2260. The rotor 2254 and the rotor 2264 may be synchronized (i.e., running at the same speed), but the stator 2252 and the stator 2262 may not be in phase with each other.

In this embodiment of FIG. 22, the first motor control module 2216 and the second motor control module 2218 may be the same type of motor control modules or may be different types of motor control modules. For example, the first motor control module 2216 and the second motor control module 2218 may both be sensorless motor control modules. That is, the motor control modules may not use sensors (e.g., Hall sensors) to determine the position of the rotor 2254 and the rotor 2264, but instead may use current and voltage information to determine the position of the rotor 2254 and the rotor 2264.

In another example, the first motor control module 2216 and the second motor control module 2218 may both be sensored motor control modules. That is, the motor control modules may use sensors (e.g., Hall sensors) to determine the position of the rotor 2254 and the rotor 2264.

In yet another example, one of the motor control modules may be a sensorless motor control module and the other motor control module may be a sensored motor control module. For instance, the first motor control module 2216 may be a sensorless motor control module that uses current and voltage information to determine the position of the rotor 2254. The second motor control module 2218 may be a sensored motor control module that uses sensors (e.g., Hall sensors) to determine the position of the rotor 2264.

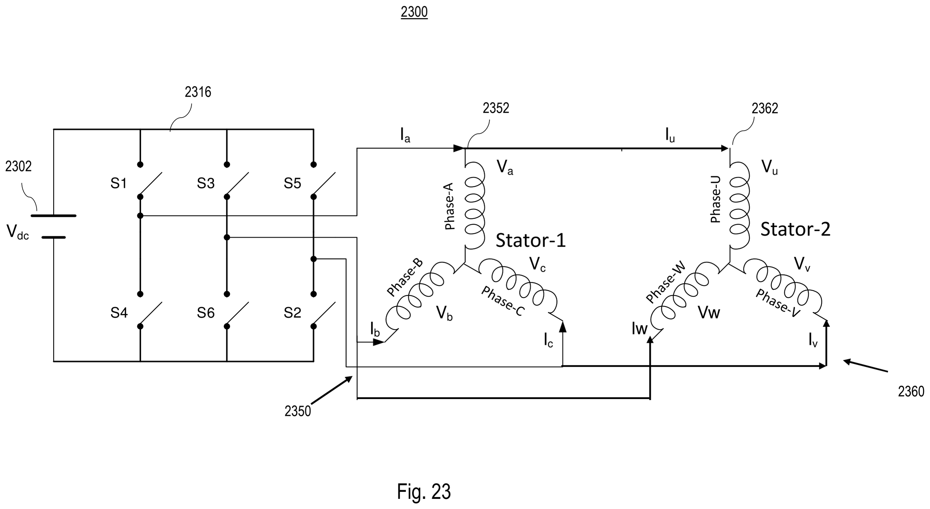

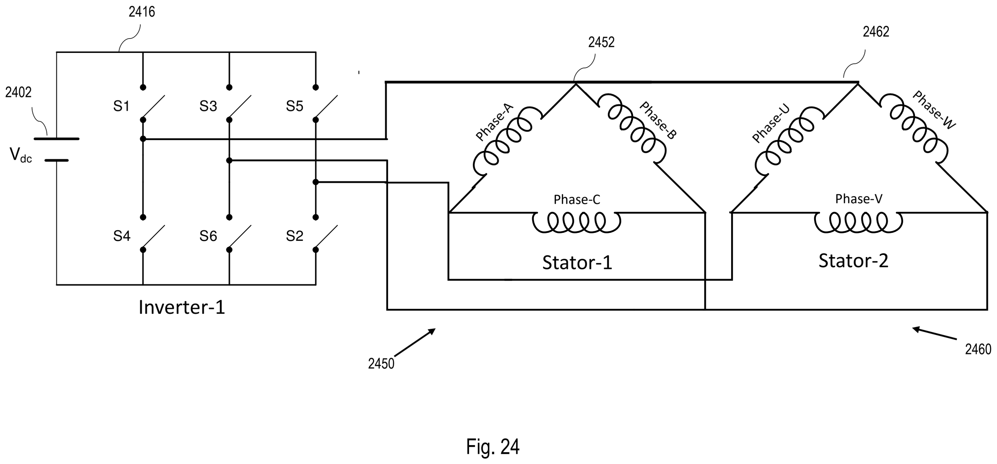

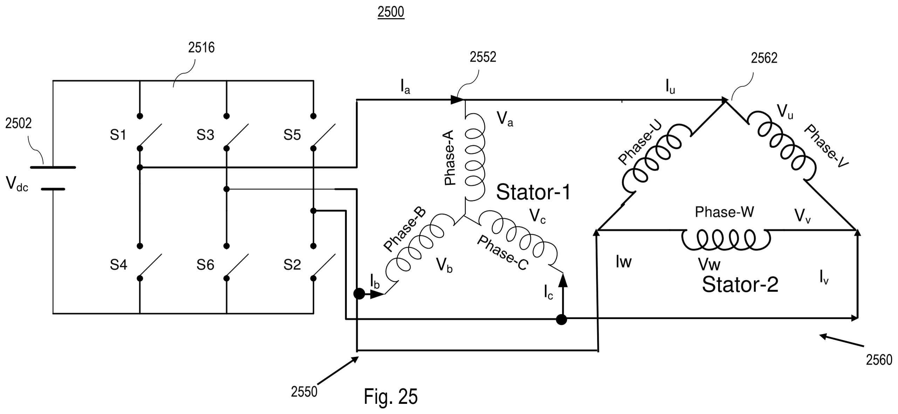

In other example embodiments, an electric motor may include two (2) motors that are mechanically coupled to the same shaft and include one motor control module that controls both motors. Each of the motors may have different configurations, as depicted in FIGS. 23-25. FIG. 23 depicts a circuit diagram of an electric motor 2300 including an inverter and two motors in a WYE-WYE configuration, according to an embodiment. FIG. 24 depicts a circuit diagram of an electric motor 2400 including an inverter and two motors in a DELTA-DELTA configuration, according to an embodiment. FIG. 25 depicts a circuit diagram of an electric motor 2500 including an inverter and two motors in a WYE-DELTA configuration, according to an embodiment.

In FIG. 23, the electric motor 2300 includes a first motor 2350 and a second motor 2360 powered by a battery pack 2302 via a motor control module 2316. In this example, the first motor 2350 includes a stator 2352 and a rotor (not shown) and the second motor 2360 includes a stator 2362 and a rotor (not shown). The stator 2352 and the stator 2362 and their respective rotors may synchronized with respect to each other. That is, the stator 2352 and the stator 2362 may be in phase with each other. The stator 2352 and the stator 2362 are in a wye-wye configuration.

In one example, the motor control module 2316 may use sensors (e.g., Hall sensors) to determine the position of the rotors for the first motor 2350 and the second motor 2360. For example, both motors may include sensors. In another example, just one of the motors may include sensors and the sensors for the one motor may be used to determine the position of the rotor in the other motor. For instance, the first motor 2350 may include sensors that are used to control both the first motor 2350 and the second motor 2360, where the second motor 2360 does not include sensors.

In another example, the motor control module 2316 may be sensorless and may use the current and voltage information from the first motor 2350 and the second motor 2360 to determine the position of the rotors of the motors and use that information to control the first motor 2350 and the second motor 2360.

In FIG. 24, the electric motor 2400 includes a first motor 2450 and a second motor 2460 powered by a battery pack 2402 via a motor control module 2416. In this example, the first motor 2450 includes a stator 2452 and a rotor (not shown) and the second motor 2460 includes a stator 2462 and a rotor (not shown). The stator 2452 and the stator 2462 and their respective rotors may synchronized with respect to each other. That is, the stator 2452 and the stator 2462 may be in phase with each other. The stator 2452 and the stator 2462 are in a delta-delta configuration.

In one example, the motor control module 2416 may use sensors (e.g., Hall sensors) to determine the position of the rotors for the first motor 2450 and the second motor 2460. For example, both motors may include sensors. In another example, just one of the motors may include sensors and the sensors for the one motor may be used to determine the position of the rotor in the other motor. For instance, the first motor 2450 may include sensors that are used to control both the first motor 2450 and the second motor 2460, where the second motor 2460 does not include sensors.

In another example, the motor control module 2416 may be sensorless and may use the current and voltage information from the first motor 2450 and the second motor 2460 to determine the position of the rotors of the motors and use that information to control the first motor 2450 and the second motor 2460.

In FIG. 25, the electric motor 2500 includes a first motor 2550 and a second motor 2560 powered by a battery pack 2502 via a motor control module 2516. In this example, the first motor 2550 includes a stator 2552 and a rotor (not shown) and the second motor 2560 includes a stator 2562 and a rotor (not shown). The stator 2552 and the stator 2562 and their respective rotors may synchronized with respect to each other. That is, the stator 2552 and the stator 2562 may be in phase with each other. The stator 2552 and the stator 2562 are in a wye-delta configuration.

In one example, the motor control module 2516 may use sensors (e.g., Hall sensors) to determine the position of the rotors for the first motor 2550 and the second motor 2560. For example, both motors may include sensors. In another example, just one of the motors may include sensors and the sensors for the one motor may be used to determine the position of the rotor in the other motor. For instance, the first motor 2550 may include sensors that are used to control both the first motor 2550 and the second motor 2560, where the second motor 2560 does not include sensors.

In another example, the motor control module 2516 may be sensorless and may use the current and voltage information from the first motor 2550 and the second motor 2560 to determine the position of the rotors of the motors and use that information to control the first motor 2550 and the second motor 2560.

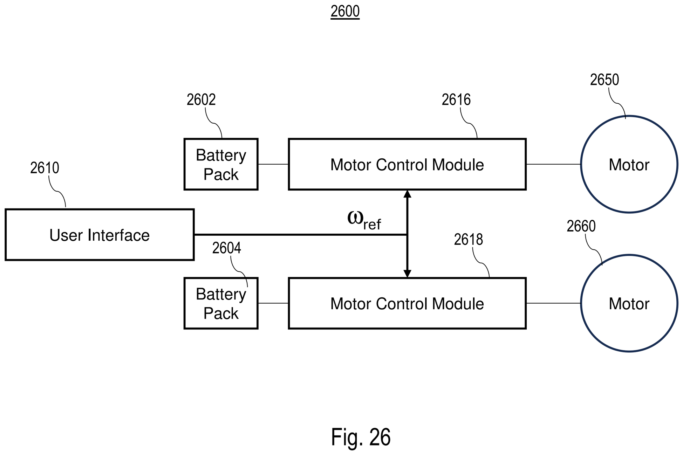

FIG. 26 depicts a block diagram of a control system for an electric motor 2600, according to an embodiment. In this example, the electric motor 2600 includes a first motor 2650 and a second motor 2660. The first motor 2650 includes a first motor control module 2616 powered by a first battery pack 2602 and the second motor 2660 includes a second motor control module 2618 powered by a second battery pack 2604. The electric motor 2600 includes a user interface 2610 that interfaces with the first motor control module 2616 and the second motor control module 2618. The example of the electric motor 2600 may be similar to the electric motor 100 of FIGS. 1-13 and the electric motor 2200 of FIG. 22. FIG. 26 illustrates an example control system configuration for controlling the electric motor 2600.

In this example embodiment, the user interface 2610 includes an interface for a user speed input ($w_{ref}$) and the user interface 2610 does not manage (discharge/charging control) the first battery pack 2602 or the second battery pack 2604. Instead, the first motor control module 2616 manages the first battery pack 2602 and the second motor control module 2618 manages the second battery pack 2604. The first motor control module 2616 is responsible for any battery status indication and execution of any shutdown mechanisms for the first battery pack 2602 and the second motor control module 2618 is responsible for any battery status indication and execution of any shutdown mechanisms for the second battery pack 2604.

In this example, the user interface 2610 functions as a master controller for the first motor control module 2616 and the second motor control module 2618 other than for battery pack control and management. Both the first motor control module 2616 and the second motor control module 2618 may be set to a speed control mode, where the first motor control module 2616 is programmed to 100% of the user speed input, $w_{ref1} = w_{ref}$ and the second motor control module 2618 is programmed to 98% of the user speed input, $w_{ref2 = 0.98} * w_{ref}$. In case of any field-oriented control system, torque produced is proportional to Quadrature axis current, $I_q$,

$$\text{i.e. } T_1 = K_{t1} \times I_{q1} \text{ and } T_2 = K_{t2} \times I_{q2}.$$

Where, $K_{t1}$ & $K_{t2}$ are Torque constants of the first motor 2650 and the second motor 2660, respectively. The second motor control module 2618 may be programmed to avoid any circulation of energy between the first battery pack 2602 and the second battery pack 2604. This is done by ensuring $I_{q2} \geq 0$.

In one example control method, a fine speed control mode is implemented. Both the first motor control module 2616 and the second motor control module 2618 are in fine-tuned speed control loop (i.e., the speed error < 2%). The first motor control module 2616 receives a speed command, $w_{ref1}$ through user interface 2610, uses speed PI loop to keep the shaft speed to be constant to a value $w_{ref1}$. The output of the Speed PI is $I_{qref1}$ and it controls the torque produced by the electric motor 2600. The torque produced by the first motor 2650 can be either positive or negative. The torque produced by the first motor 2650 is limited by ensuring $I_{qref1} \leq I_{qmax1}$. The

second motor control module 2618 receives a speed command, $w_{ref2}$ through user interface 2610. The value of torque produced, $T_2$ is decided by output of the speed PI controller.

At no load operation, the first motor control module 2616 keeps the system speed constant at $w_{ref1}$ and the second motor 2660 does not contribute to the system power. As system load increases, the first motor 2650 will try to continue keep the shaft speed constant to $w_{ref1}$ as long as $I_{qref1} \leq I_{qmax1}$. The second motor 2660 does not contribute any Torque (Power) during this time. When, $I_{q1}$ reaches, $I_{qmax1}$ limit, the first motor 2650 speed control loop is saturated and can no longer keep constant at $w_{ref1}$. The system speed starts dropping below the desired speed. When it reaches a speed that is below $0.98 * w_{ref1}$ the second motor 2660 will start contributing to the system torque (power), the first motor 2650 continues to produce torque proportional to $I_{qmax1}$. During this duration, as long as $I_{qref2} \leq I_{qmax2}$ speed PI loop in the second motor control module 2618 will try to keep speed to be constant to $0.98 * w_{ref1}$.

When $I_{q2}$ reaches limit of $I_{qmax2}$, both the first motor 2650 and the second motor 2660 have reached their respective current limits i.e. $I_{qmax}$, and $I_{qmax2}$. If the system is loaded further the speed will drop below $0.98 * w_{ref1}$. All the protection mechanisms $I^2t$, module temperature, motor temperature and under speed limit etc., are active in both the first motor control module 2616 and the second motor control module 2618 throughout operation and can disable/shutdown the respective motor control module at any point.

In another example control method, a coarse speed control mode is implemented. Both the first motor control module 2616 and the second motor control module 2618 are in coarse-tuned speed control loop (i.e., speed 2%<error<10%). The first motor control module 2616 receives a speed command, $w_{ref1}$ through the user interface 2610 and uses speed PI loop to keep the shaft speed to be constant to a value $w_{ref1}$. The output of the Speed PI is $I_{qref1}$ and it controls the torque produced by the electric motor 2600. The torque produced by first motor 2650 can be either positive or negative. The torque produced by first motor 2650 is limited by ensuring $I_{qref1} \leq I_{qmax1}$. The second motor control module 2618 receives a speed command, $w_{ref2}$ through the user interface 2610. The value of torque produced, $T_2$ is decided by output of the speed PI controller.

At no load operation, the first motor control module 2616 keeps system speed constant at $w_{ref1}$ and the second motor 2660 does not contribute to the system power. As system load increases, the first motor 2650 will try to continue keep the shaft speed constant to $w_{ref1}$. When, $w_1$ drops below $0.98 * w_{ref1}$, both the first motor 2650 and the second motor 2660 start contributing to the power and share the load almost equally. This continues till both the first motor 2650 and the second motor 2660 reach the limit of maximum torque i.e. both $I_{q1} = I_{q1max}$ and $I_{q2} = I_{q2max}$.

All the protection mechanisms I²t, module temperature, motor temperature and under speed limit etc., are active in both the first motor control module 2616 and the second motor control module 2618 throughout operation and can disable/shutdown the respective motor control module at any point.

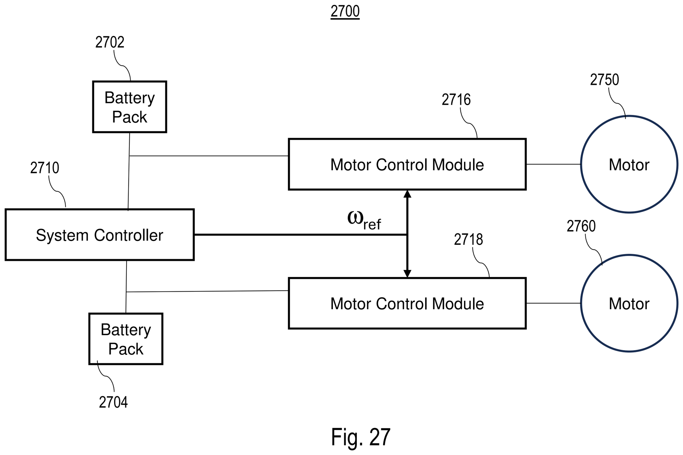

FIG. 27 depicts a block diagram of a control system for an electric motor 2700, according to an embodiment. In this example, the electric motor 2700 includes a first motor 2750 and a second motor 2760. The first motor 2750 includes a first motor control module 2716 powered by a first battery pack 2702 and the second motor 2760 includes a second motor control module 2718 powered by a second battery pack 2704. The electric motor 2700 includes a system controller 2710 that includes a user interface and that interfaces with the first battery pack 2702, the first motor control module 2716, the second battery pack 2704, and the second motor control module 2718. The example of the electric motor 2700 may be similar to the electric motor 100 of FIGS. 1-13 and the electric motor 2200 of FIG. 22. FIG. 27 illustrates an example control system configuration for controlling the electric motor 2700.

In this example embodiment, the system controller 2710 includes an interface for a user speed input ($w_{ref}$) and the system controller 2710 does manage the first battery pack 2702 and the second battery pack 2704 and is responsible for any battery status indication and execution of any shutdown mechanisms for the first battery pack 2702 and for the second battery pack 2704.

In this example, the system controller 2710 functions as a master controller for the first motor control module 2716 and the second motor control module 2718 including for battery pack control and management. Both the first motor control module 2716 and the second motor control module 2718 may be set to a speed control mode, where the first motor control module 2716 is programmed to 100% of the user speed input, $w_{ref1} = w_{ref}$ and the second motor control module 2718 is programmed to 98% of the user speed input, $w_{ref2} = 0.98 * w_{ref}$. **In** case of any field-oriented control system, torque produced is proportional to $I_q$,

$$\text{i.e. } T_1 = K_{t1} \times I_{q1} \text{ and } T_2 = K_{t2} \times I_{q2}.$$

Where, $K_{t1}$ & $K_{t2}$ are Torque constants of the first motor 2750 and the second motor 2760, respectively. The second motor control module 2718 may be programmed to avoid any circulation of energy between the first battery pack 2702 and the second battery pack 2704. This is done by ensuring $I_{q2} \geq 0$.

As discussed above with respect to FIG. 26, both speed control methods described above, the fine-tuned speed control loop and the coarse-tuned speed control loop, may be implemented by the control system for the electric motor 2700, with a difference being that the system controller 2710 controls the user speed input and also manages the first battery pack 2702 and the second battery pack 2704 such that the system controller 2710 can decide $w_{ref1}$ and $w_{ref2}$ based on battery status, user inputs and other variables such as temperature, battery pack identifier (ID), etc.

In addition to the speed control modes described above, the control system for the electric motor 2700 may use the system controller 2710 as a master controller where the first motor control module 2716 is set in speed control mode and the second motor control module 2718 is set in torque control mode. The system controller 2710 sends a speed command $w_{ref1} = w_{ref}$ to the first motor control module 2716, the value of which is decided based on user input and other system parameters. The system controller 2710 sends a torque command, $T_{ref}$ to the second motor control module 2718.

The first motor control module 2716 operation is the same or similar to the speed control mode described above and can be in coarse-tuned mode or fine-tuned mode. The second motor control module 2718 receives a torque command, and generates its own quadrature axis current reference, using equation $I_{qref2} = K_{t2} \times T_{ref}$. The outer speed loop for the second motor control module 2718 is disabled either through a pre-programming or by setting speed high i.e. $w_{ref2} = w_{ref}$.

At no load operation, the first motor control module 2716 keeps system speed constant at $w_{ref}$ and the second motor 2760 does not contribute to the system power. As system load increases, the first motor control module 2716 will try to continue keep the shaft speed constant to $w_{ref1}$ as long as $I_{q1} < I_{qmax1}$. The second motor 2760 does not contribute any torque (power) during this time. PI Controllers are fine-tuned such as actual speed is within +/-2% of commanded speed. When, $I_{q1}$ reaches, $I_{qmax1}$ limit, the first motor 2750 speed control loop is saturated and can no longer keep speed constant at $w_{ref}$. At this point, the second motor 2760 will start contributing to the system torque (power), meanwhile the first motor 2750 continues to produce maximum torque, proportional to $I_{qmax1}$. During this duration, as long as $I_{q2} < I_{qmax2}$, speed PI loop in the first motor control module 2716 and the second motor control module 2718 work together to keep operating speed close to $w_{ref}$.

When $I_{q2}$ reaches $I_{qmax2}$, both the first motor control module 2716 and the second motor control module 2718 are generating maximum torque, any further increase in load torque will results in drop in the speed. This will continue till the speed drops below a minimum threshold or I²t limit of either of the battery packs (first battery pack 2702 or second battery pack 2704) or the control modules (first motor control module 2716 or second motor control module 2718).

In an embodiment, it is possible to have the first motor control module 2716 in coarse speed control mode, such as actual speed is within +/-10% of commanded speed. For the second motor control module 2718, a positive value of speed error, i.e. $w_{err2}$, leads to increase in value of $I_{qref2}$. As a result, the second motor 2760 also contributes to the torque. At a certain point, the first motor 2750 saturates ($I_{q1}$ reaches the maximum i.e. $I_{qmax1}$), but the second motor 2760 continues to generate torque until $I_{q2}$ reaches $I_{qmax2}$. During this period, if $I_{q2} \leq I_{qmax2}$, the speed PI loops in the first motor control module 2716 and the second motor control module 2718 work together to maintain the operating speed close to $w_{ref}$.

All the protection mechanisms $I^2t$, module temperature, motor temperature and under speed limit etc. are active in both the first motor control module 2716 and the second motor control module 2718 throughout operation and can disable/shutdown corresponding controller at any point. The system controller 2710 is responsible for battery management and can command zero speed i.e. shutdown based on either the first motor control module 2716 or the second motor control module 2718 based on undervoltage, high battery temperature etc.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "lower," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

While certain features of the described implementations have been illustrated as described herein, many modifications, substitutions, changes, and equivalents will now occur to those skilled in the art. It is, therefore, to be understood that the appended claims are intended to cover all such modifications and changes as fall within the scope of the embodiments.

## Claims

1. An electric motor, comprising:

   a motor housing;
   a shaft that extends in a longitudinal direction through a length of the motor housing;
   a first motor disposed within the motor housing and mounted to the shaft;
   a second motor disposed within the motor housing and mounted to the shaft;
   an adaptor disposed within the motor housing, wherein a portion of the first motor and a portion of the second motor are disposed within the adaptor and the adaptor supports and pilots the first motor and the second motor; and

at least one motor controller disposed on the adaptor and within the motor housing, the at least one motor controller electrically connected to the first motor and to the second motor.

2. The electric motor of claim 1, wherein the at least one motor controller is a first motor controller that is electrically connected to the first motor, and the electric motor further comprises a second motor controller disposed on the adaptor and disposed within the motor housing, the second motor controller electrically connected to the second motor.

3. The electric motor of claim 2, wherein the first motor controller is configured to manage a first battery pack and is programmed in a speed control mode to rotate the first motor at an input speed, and the second motor controller is configured to manage a second battery pack and is programmed in a speed control mode to rotate the second motor at less than the input speed.

4. The electric motor of claim 2 or claim 3, wherein during a no load operation the first motor controller maintains a constant speed on the shaft using the first motor to contribute torque to the shaft and the second motor does not contribute torque to the shaft.

5. The electric motor of claim 4, wherein during a load operation the second motor begins to contribute torque to the shaft when a speed of the first motor drops below a threshold speed.

6. The electric motor of claim 2, further comprising a system controller that manages a first battery pack for the first motor and a second battery pack for the second motor, wherein the first motor controller is programmed in a speed control mode and the second motor controller is programmed in a speed control mode.

7. The electric motor of claim 6, wherein the system controller controls the first motor to rotate at an input speed and controls the second motor to rotate at a speed less than the input speed.

8. The electric motor of claim 2, further comprising a system controller that manages a first battery pack for the first motor and a second battery pack for the second motor, wherein the first motor controller is programmed in a speed control mode and the second motor controller is programmed in a torque control mode.

9. The electric motor of any preceding claim, wherein the first motor is an outer rotor motor, and the second motor is an outer rotor motor.

10. The electric motor of any preceding claim, wherein: the first motor faces the second motor; the first motor rotates in a first direction; and the second motor rotates in a second direction that is opposite the first direction such that first motor and the second motor drive the shaft in a same direction.

11. The electric motor of any preceding claim, further comprising:

a first end cap that forms a rear wall, the first end cap having a first bearing pocket; and
a second end cap that forms a front wall, the second end cap having a second bearing pocket, wherein:

the first motor includes a first stator mounted to a first motor housing and a first rotor mounted to the shaft via a first bearing in the first bearing pocket, and
the second motor includes a second stator mounted to a second motor housing and a second rotor mounted to the shaft via a second bearing in the second bearing pocket.

12. The electric motor of claim 11, wherein the first motor housing, the second motor housing, and the adaptor, include a series of fins that extend radially outward and longitudinally along a direction of the shaft.

13. The electric motor of any preceding claim, further comprising a fan coupled to the shaft within the motor housing, the fan external to the first motor and the second motor.

14. The electric motor of claim 13, further comprising a baffle disposed within the motor housing and around the shaft external to the first motor and the second motor, the baffle being disposed adjacent the fan and preferably having a conical shape.

15. The electric motor of any preceding claim, further comprising a third motor disposed within the motor housing and mounted to the shaft.

16. The electric motor of any preceding claim, further comprising wiring that electrically connects the at least one motor controller to the first motor and to the second motor, the wiring running in a gap between the motor housing and an external surface of the adaptor.

Fig. 1

Fig. 2

Fig. 3

Front

Fig. 4

Fig. 5

Fig. 6

Fig. 7

Fig. 8A

Fig. 8B

Fig. 9

EP 4 749 891 A2

Fig. 10

100

Fig. 11A

300

Fig. 11B

300

Fig. 11C

Fig. 11D

316

Fig. 11E

316

Fig. 11F

316

Fig. 11G

316

362

360

358

364

366

368

356

370

372

354

350

352

374

Fig. 11H

Fig. 12

Fig. 13A

Fig. 13B

100

106

110

156

A

A

318

316

518

516

166

400

410

112

Fig. 13C

Fig. 13D

Fig. 14

1400

1416

1408

1406

1410

Fig. 15

1400

Fig. 16

1700

1718

1716

1706

1717

Fig. 17

Fig. 18

1900

Fig. 19

100

Fig. 20

Fig. 21

1700

Fig. 22

Fig. 23

Fig. 24

2460

2462

Phase-W

Phase-V

Stator-2

Phase-U

2452

Phase-B

Phase-C

Stator-1

Phase-A

2450

2416

S5

S3

S1

S2

S6

S4

Inverter-1

2402

$V_{dc}$

Fig. 25

2600

Fig. 26

2700

2702

Battery
Pack

2710

System Controller

$\omega_{ref}$

2716

Motor Control Module

2750

Motor

2718

Motor Control Module

2760

Motor

2704

Fig. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20240072586 A